# EUROPEAN PATENT SPECIFICATION

(11) **EP 1 800 820 B1**
(45) Date of publication and mention of the grant of the patent: **12.12.2012**
(21) Application number: 05790181.1
(22) Date of filing: 05.10.2005
(51) Int. Cl.: B28D 5/00

(54) **METHOD AND APPARATUS FOR SCRIBING BRITTLE MATERIAL BOARD AND SYSTEM FOR BREAKING BRITTLE MATERIAL BOARD**
VERFAHREN UND VORRICHTUNG ZUM ANREISSEN EINER PLATTE AUS SPRÖDEM MATERIAL UND SYSTEM ZUM BRECHEN EINER PLATTE AUS SPRÖDEM MATERIAL
PROCEDE ET APPAREIL DE DECOUPE DE PLAQUETTE EN MATIERE CASSANTE ET SYSTEME DE RUPTURE DE PLAQUETTE EN MATIERE CASSANTE

(30) Priority: 13.10.2004 JP 2004299446
(43) Date of publication of application: 27.06.2007
(73) Proprietor: Mitsuboshi Diamond Industrial Co., Ltd., Suita-city, Osaka Pref. 564-0044 (JP)
(72) Inventor: TAKAMATSU, Kiyoshi, MITSUBOSHI DIAMOND IND. CO., LTD., Suita-city, Osaka 5640044 (JP); OTODA, Kenji, MITSUBOSHI DIAMOND INDUSTRIAL CO., LTD., Suita-city, Osaka 5640044 (JP)
(74) Representative: TBK
(86) International application number: PCT/JP2005/018475
(87) International publication number: WO 2006/040988

(56) References cited:
- JP-A- 6 144 860
- JP-A- 11 079 770
- JP-A- 11 079 770
- JP-A- 59 018 123
- JP-A- 2002 050 589
- JP-A- 2003 286 044
- US-A1- 2004 074 366

## Description

### Field of the invention

The present invention relates to: a scribing method for scribing brittle material substrates such as semiconductor wafers, glass substrates, and ceramic substrates along a planned scribing line; a scribing apparatus utilizing the method thereof; and a separating system for brittle material substrates.

### Background Technology

Display devices with flat display panels such as liquid crystal display panels, plasma display panels, and organic electroluminescence display panels, structure panel substrates by bonding two sheets of glass substrate that are brittle material substrates. When fabricating these panel substrates, a mother glass substrate is separated into glass substrates with predetermined sizes. The separating process of the glass substrate involves forming a scribe line on the mother glass substrate along a planned scribing line. Following this, the mother glass substrate is then separated along the scribe line by using the formed scribe line as a central axis to apply a predetermined amount of internal bending stress to the substrate.

Panel substrates employed by flat panel displays that are display devices, are fabricated by separating a mother glass substrate with large dimensions into glass substrates of predetermined sizes. In recent years, together with a growth in the size of flat panel displays, mother glass substrates have also become larger; some, for example, to dimensions of 1100 mm × 1250 mm. On top of this, there is an ongoing trend to make the mother glass substrates thinner; thus, mother glass substrates that are 0.5 mm in thickness are starting to be used. Furthermore, mother glass substrates that have large dimensions of 1500 mm × 1800 mm but are only 0.7 mm in thickness, are also being used.

As a method for forming a scribe line, a mother glass substrate is to be fixed on a securing table and thereafter, the substrate is pressed and rolled over by a wheel cutter for scribing, or a crack is made in advance on the mother glass substrate and thereafter, a laser beam shall irradiate the tip of the crack to generate thermal distortion, while at the same time the crack is propagated further by means of shifting the position of the laser beam irradiation. By these means, a scribe line will generate from a vertical crack formed along the direction of the thickness of the mother glass substrate.

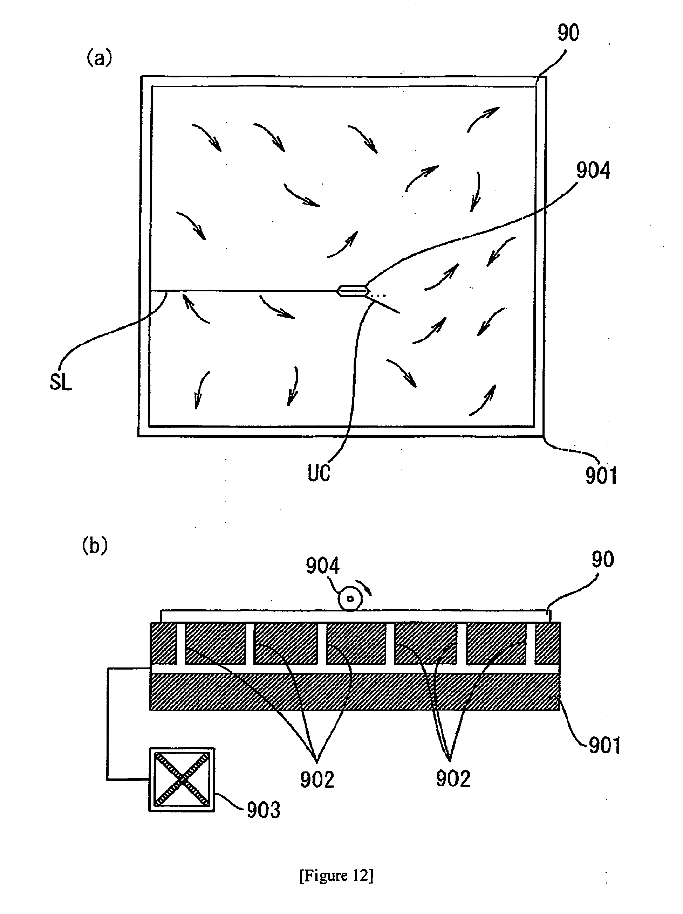

Figure 12(a) is a pattern diagram describing problems that result when scribing the mother glass substrate while utilizing conventional scribing methods. Figure 12(b) is a sectional side view of Figure 12(a). On the securing table 901, to which the mother glass substrate 90 is fixed to, a plurality of suction holes 902 are setup with openings at the upper surface thereof. Each of the suction holes 902 are in a vacuum state by a suction means 903 such as a vacuum pump or a suction motor and the mother glass substrate 90 is vacuum-chucked to securing table 901 by means of the suction holes suctioning the mother glass substrate 90 when it is placed on the upper surface of the securing table 901.

However, as abovementioned, if for example a thin mother glass substrate 90 with large longitudinal and transverse dimensions, such as 1100mm x 1250mm and 0.5mm in thickness, is placed on the securing table 901 and vacuum-chucked onto the securing table 901 via suction from a plurality of suction holes 902 formed on the securing table 901, because the flatness of the surface of the securing table 901 is over 50µm, the surface of the mother glass substrate 90 being vacuum-chucked onto the securing table 901 will be prone to undulations forming.

Due to this, tensile stress and compressive stress mixedly exist and unequal internal stress like those represented by arrows in Figure 12(a) could result inside the mother glass substrate. The direction indicated by the arrows in the same Figure represents the gradients of such internal stress.

If the cutter wheel 904 is pressed and rolled on the surface of the mother glass substrate 90 to scribe along the planned scribing line when unequal internal stress is produced in the mother glass substrate 90 as describe above, the cutter wheel may be subjected to influence by the internal stress within the mother glass substrate 90. If this happens, there is concern that an unnecessary crack UC may continuously derive in an unspecified and uncontrollable direction on a vertical crack produced during scribing (described as scribe line SL on the Figure). Such a phenomenon is considered to result from a loosening in internal stress within the mother glass substrate 90 due to the vertical crack being formed, as well as distortions that are produced in the scribing direction (front side) on the mother glass substrate 90.

Thus, unless the vertical crack (scribe line) is formed precisely along the planned scribing line, the mother glass substrate cannot be separated into glass substrates of predetermined sizes during the separating (breaking) process later on. Because of this, there is concern that the yield rate regarding the fabrication of panel substrates for flat panel displays could significantly decrease, as the bigger the dimensions of the mother glass substrate becomes, the more prominent the adverse effects caused by fluctuations in the foregoing internal stress will notably appear.

Furthermore, in the case of bonded substrates such as liquid crystal displays bonding therein thin film transistor (TFT) substrates and color filter substrates, separation is conducted after the mother glass substrates are bonded together, and scribe lines have been formed on each of the surfaces of the pair of mother glass substrates being bonded together. In this case, by bonding the mother glass substrates together, each mother glass substrate will have produced large localized distortions within. Securing on a securing table and scribing a mother glass substrate in which such large distortions have resulted thereon, will increase the degree of abovementioned unnecessary cracks generating in an unspecified and uncontrollable direction during scribing. This in turn raises the chances of a defective separated product being fabricated from the mother glass substrate.

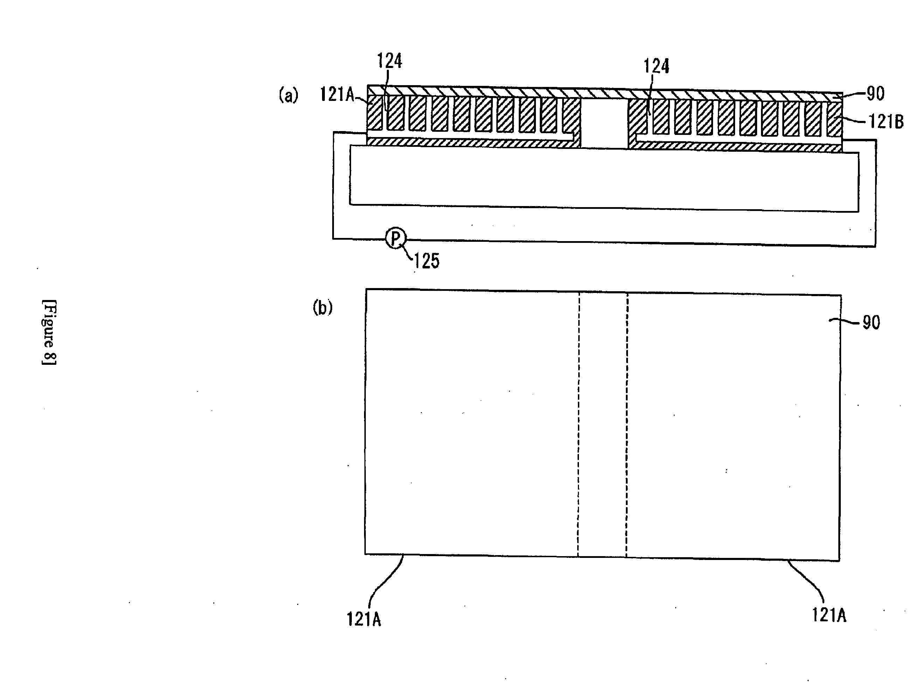

US 2004/0074366 A1 discloses scribing apparatuses for cutting liquid crystal display panels. The scribing apparatus shown in Fig. 8 has a pair of securing tables arranged with an interval and means for table movement. Suction holes disposed on the surfaces of the first and second tables are used to hold first and second brittle material substrates in cutting them along first and second scribe lines formed at the surfaces of the first and second substrates with respective cutting wheels. Then, after forming the first and second scribe lines, the first and second tables are moved to different directions to break or cut the substrates along the scribe lines.

In JP 11-079770 A, when a scribe line is formed on a glass substrate by means of a cutter, the section of the glass substrate on which the scribe line is to be formed is pressed and protruded upwards. This is in order to add tension to the glass substrate along a direction perpendicular to the traveling direction of the cutter. Disclosed thereinafter is a structure for scribing under these pressed conditions.

### Disclosure of the Invention

### Problems to be Solved by the Invention

Conditions when scribing the mother glass substrate 90 utilizing the scribing apparatus appearing in JP 11-079770 A is shown on Figures 13(a) and 13(b). In this case, as shown in Figure 13(b), tension F is applied to the mother glass substrate 90 in order to press the section of the mother glass substrate 90 whereon the scribe line is to be formed to make it protrude upwards. Such a structure is implemented to forcibly deform the glass substrate into a convex bent surface so a vertical crack will extend toward the thickness direction of the glass substrate during scribing. However, if the section where the scribe line is to be formed on is protruded upwards while a cutter wheel 904 presses and rolls thereon along a planned scribing line, a crack UC that cannot be controlled in the scribing direction will derive in continuation with the formation of a vertical crack (scribe line SL) on the mother glass substrate 90. Because of this, there is concern that a straight scribe line will not be formed.

The present invention is designed to solve these problems, and the purpose of the invention is to provide a scribing method, a scribing apparatus, and a separating system that will precisely form a scribe line along a planned scribing line on a brittle material substrate such as glass substrates. Thereby, the present invention will significantly increase yield rates of the separating procedure for brittle material substrates.

### Means of Solving the Problems

According to the present invention, a scribing method will be provided for when forming a scribe line along a planned scribing line arranged on at least one side of a brittle material substrate, wherein internal stress in the vicinity of the planned scribing line is equalized by forming a micro distortion in advance on the said brittle material substrate. The scribing method according to the present invention is defined in claim 1.

According to the present invention, a scribing apparatus will be provided for forming a scribe line along a planned scribing line arranged on at least one side of a brittle material substrate, wherein the scribing apparatus has means for equalizing internal stress so that internal stress in the vicinity of the planned scribing line will be equalized. This will be by means of a scribing method for forming a vertical crack through the thickness of the said brittle material substrates, and by forming a micro distortion on the said brittle material substrate. The scribing apparatus according to the present invention is defined in claim 3.

Furthermore, according to a different perspective of the present invention, a separating system is provided for a brittle material substrate, wherein possessing a breaking device for breaking the said brittle material substrate along a scribe line formed on the said brittle material substrate by means of the said scribing apparatus. The separating system according to the present invention is defined in claim 5.

### Effect of the Invention

According to the scribing method of the present invention, by forming a micro distortion in advance on the brittle material substrate, the internal stress in the vicinity of the planned scribing line can be equalized. Thus, an unnecessary crack can be prevented from deriving on a vertical crack formed on the brittle material substrate. The internal stress potentially secured by the said brittle substrate, can be distributing towards a pulling direction or a compressing direction. The micro distortion formed in advance on the said brittle material substrate will off set differences between the maximum value and the minimum value of such internal stress distribution along the planned scribing line. As a result, a vertical crack can be precisely formed along the planned scribing line in which internal stress has been equalized.

Once a brittle material substrate is mounted and laid over the pair of securing tables, and the said substrate has been suction-chucked onto the said securing tables, micro distortion is formed on the said substrate by having each of the said securing tables mutually approach or draw from each other in the direction perpendicular to the said planned scribing line (or in a direction along the said planned scribing line). Therefore, it is possible to achieve an equalized internal stress through simple mechanisms.

When forming a micro distortion on the brittle material substrate, the equalizing of stresses near the planned scribing line is detected by an internal stress detecting means.

Because each of the said securing tables will be either approached or drawn from each other according to detection results detected by the internal stress detecting means, regions on a substrate with equalized internal stress can be precisely scribed.

A method for forming a scribe line includes a method whereby a laser beam is irradiated along the said planned scribing line and/or a method wherein a wheel cutter is rolled along the planned scribing line.

The method that irradiates a laser beam uses thermal disposition generated on the brittle material substrate to produce a vertical crack and form a scribe line. Because of this, when a region with equalized internal stress is scribed, there is no residual internal stress distortions on the edges of the separated surface of the brittle material substrate after being separated, thus preventing unnecessary chipping from generating on the separated surface.

Regarding the method that rolls a wheel cutter, by scribing a region with equalized internal stress, the range of conditions for forming a scribe line on the brittle material substrate becomes expanded, thus scribe lines can be formed along a planned scribing line on a stable basis.

According to the scribing apparatus for brittle material substrate of the present invention, by forming a micro distortion in advance on the brittle material substrate, the internal stress in the vicinity of the planned scribing line is equalized. Thus, unnecessary cracks are prevented from deriving from a vertical crack formed on the brittle material substrate.

As a means for equalizing internal stress, a configuration made of having a pair of securing tables arranged with intervals that suction-chuck the said brittle material substrate, as well as a means of table movement to mutually approach or draw from each securing table, is used.

The configuration further has internal stress detection means that detect the equalizing of internal stress near the planned scribing line.

The configuration further has a control unit for carrying out instructions to the said means of table movement to have each of the said securing tables approach or draw from each other according to detection results detected by internal stress detection means. Thus, regions on a substrate with equalized internal stress can be precisely scribed.

The separating system for a brittle material substrate is made by integrally connecting the scribing apparatus of the present invention and the breaking device that breaks the said substrate along the scribe line formed on the brittle material substrate by means of the said scribing apparatus. Thus, the system can continuously carry out the processes of forming a scribe line and breaking the said substrate along the formed scribe line, over a device with a single line constitution.

Furthermore, because the present invention can positively form a scribe line along the planned scribing line on a brittle material substrate such as glass substrate, the yielding rate of work separating the brittle material substrate can be significantly improved.

### Brief Description of the Drawings

Figure 1 is a perspective view showing an example of a schematic structure of the scribing apparatus outside the scope of the present invention.
Figure 2(a) is a schematic front view of the pair of securing tables that are the main body of the scribing apparatus shown in Figure 1. Figure 2(b) is a top view of Figure 2(a).
Figure 3 is a perspective view showing an example of a schematic structure of the scribing apparatus in Embodiment 1 of the present invention.
Figure 4 is a schematic structural view showing a frame format of the structure of the distortion detection unit.
Figure 5(a) is a schematic front view of the pair of securing tables that are the main body of the scribing apparatus. Figure 5(b) is a top view of Figure 5(a).
Figure 6 is a perspective view showing an example of the schematic structure of the scribing apparatus in Embodiment 2 of the present invention.
Figure 7 is a perspective view showing an example of the schematic structure of the separation system in Embodiment 3 of the present invention.
Figure 8(a) is a schematic structural diagram of the pair of securing tables that are the main body of the separation device, as well as its adsorption mechanisms. Figure 8(b) is a top view of Figure 8(a).
Figure 9 is a front view showing an example of the scribing unit and the breaking unit employed in the separation system shown in Figure 7.
Figure 10 is a front view showing an example of a structure of the pressure roller mechanism utilized in the breaking unit 140 shown in Figure 7.
Figure 11 is a figure showing a condition when pressure roller 142a is pressed onto the upper surface section of the mother glass substrate 90 by a predetermined pressure.
Figure 12(a) is a view describing a frame format of the problems generated when scribing the mother glass substrate utilizing conventional scribing methods. Figure 12(b) is a sectional side view of Figure 12(a).

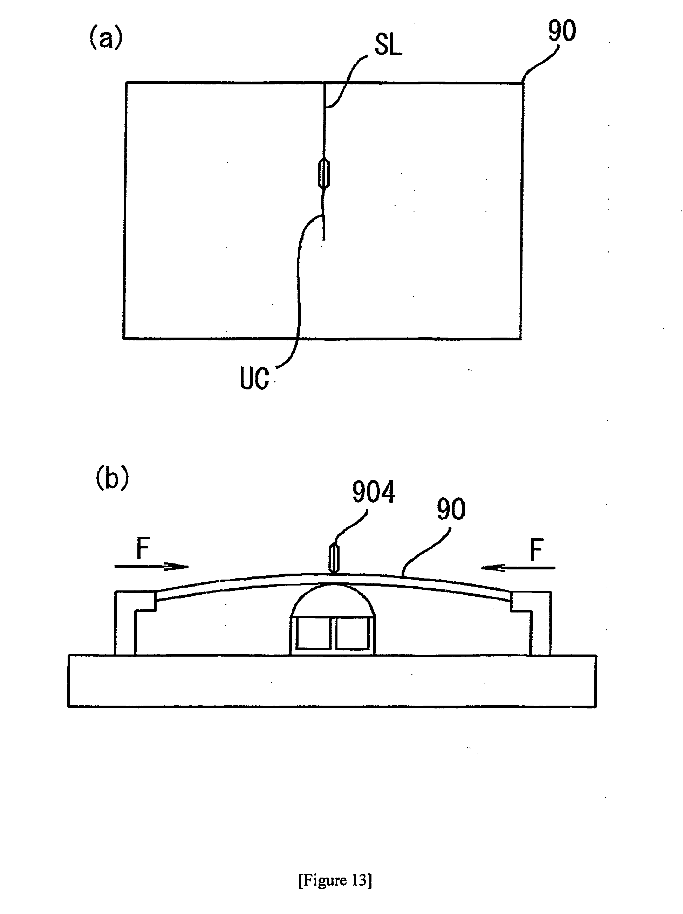

Figure 13(a) is a view describing a frame format when scribing the mother glass substrate utilizing conventional scribing methods. Figure 13(b) is a view describing a frame format of the device shown on Figure 13(a).

### Description of Numerical Codes

10, 40, 60 scribing apparatus
25 guide bar
28 scribing unit
29 scribing head
31 cutter wheel
32 tip holder
47 distortion detection unit (internal stress detection means)
90 mother glass substrate
100 separation system
112 upper guide rail
113 lower guide rail
120 substrate supporting mechanism
130 scribing unit
138a cutter wheel tip
140 breaking unit
180 distortion detection unit (internal stress detection means)

### The Best Mode of Practicing the Invention

### <Example>

In an example of a scribing method, equalizing of internal stress near the planned scribing line is carried out by either compressing or pulling the brittle material substrate in advance towards a direction coinciding with the scribing direction.

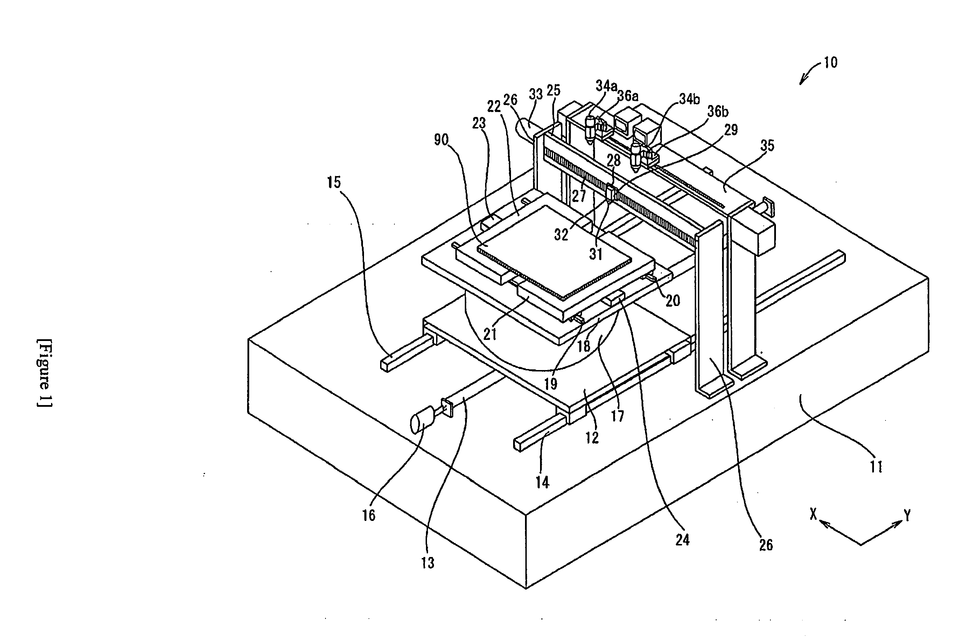

Figure 1 is a perspective view showing a schematic structure of the scribing apparatus. The scribing apparatus 10 is an apparatus that forms a scribe line on the mother glass substrate 90. As shown in Figure 1, scribing apparatus 10 consists of a slidable table 12 that is reciprocally movable along base 11 in a horizontal direction (along the Y axial direction in the Figure).

The slidable table 12 is supported to be slidable along a pair of horizontal guide rails 14 and 15. The guide rails 14 and 15 are parallel to each other and are provided on the upper surface of the base 11 while they extend in the Y axial direction. At a central position between the guide rails 14 and 15, a ball screw 13 parallel to the guide rails 14 and 15 is set up so as to be rotated by a motor 16. A ball nut (not shown) is engaged with the ball screw 13, and by means of the ball screw 13 rotating forward and backward, the ball nut slides along the ball screw 13 in both directions. By these means, the slidable table 12 that is integrally attached to the ball nut slides in both directions along the guide rails 14 and 15 in the Y axial direction.

A rotating mechanism 17 is provided on the slidable table 12. A subtable 18 is attached on top of the rotating mechanism 17 in a state horizontal to the rotating mechanism 17. The rotating mechanism 17 rotates the subtable 18 around a central axis going in a vertical direction so the table will be at an arbitrary rotation angle θ against the standard position.

The subtable 18 consists a pair of tables, the first securing table 21 and the second securing table 22. Each is reciprocally movable in a horizontal state along a direction perpendicular to the Y axial direction (X axial direction).

Supported by drive mechanisms 23 and 24 such as a ball screw and a motor (hereby ball screw/motor) or a linear motor, the first securing table 21 and the second securing table 22 are slidable along a pair of horizontal guide rails 19 and 20. The guide rails 19 and 20 are provided over the upper surface of the subtable 18 and extend in the X axial direction, parallel to each other. The first securing table 21 and the second securing table 22 are provided along the X axial direction with predetermined spacing according to the size of the mother glass substrate 90. On the upper surface of the first securing table 21 and the second securing table 22 a plurality of suction holes not shown on the Figure are provided. The suction holes are connected to a vacuum pump, and will suction-chuck the mother glass substrate 90.

A guide beam 25 is spanned between the top edges of a pair of pillars 26 on the upper side of the first securing table 21 and the second securing table 22. The guide beam 25 extends along the X axial direction perpendicular to the sliding direction of the subtable 18 (Y axial direction). On the guide beam 25, a guide rail 27 is set up; and on this guide rail 27, a scribing unit 28 is set up to be slidable thereon. The scribing unit 28 will be slid towards the X axial direction by, for example, drive mechanisms such as a motor 33 and a ball screw (not shown). A scribe head 29 is attached on the scribing unit 28, and a vertically movable tip holder 32 that supports the cutter wheel tip 31 so it is rotatable is provided on the scribe head 29.

Near the guide beam 25, a pair of CCD (Charge Coupled Device) cameras 34a and 34b are set up on a support 35. When positioning the mother glass substrate 90, the cameras are to image the alignment mark provided on the mother glass substrate 90. Oscillatory tables 36a and 36b correspondingly adjust the positions of CCD cameras 34a and 34b in the Y axial direction. Furthermore, the cameras can be moved individually in the X axial direction, which is driven by motor and ball screw or linear motor driving mechanisms.

A method of forming a scribe line on the mother glass substrate 90 utilizing a scribing apparatus with the foregoing structure is explained below.

First, the positions of the first securing table 21 and the second securing table 22 in the X axial direction are arranged in accordance with the size of the mother glass substrate 90. At the same time, the spacing between the first securing table 21 and the second securing table 22 is adjusted. When in these conditions, the mother glass substrate 90 is then mounted on top of the first securing table 21 and the second securing table 22. The vacuum pump (not shown) is then driven, and the mother glass substrate 90 is suctioned by suction holes provided on the surface of the first securing table 21 and the second securing table 22 and suction-chucked to the first securing table 21 and the second securing table 22.

After this, the line connecting the image centers of CCD camera 34a and CCD camera 34b is adjusted to be parallel to the planned scribing line. This is done by correspondingly utilizing the oscillatory tables 36a and 36b to adjust the position of CCD camera 34a and CCD camera 34b in the Y axial direction. After this, the CCD camera 34a and the CCD camera 34b are individually moved in the X axial direction, while the slidable table 12 is moved in the Y axial direction and subtable 18 is rotated. By these means, the central position between the pair of alignment marks provided on the mother glass substrate 90 are coincided with the image center of CCD camera 34a and CCD camera 34b.(hereafter, this position of the subtable 18 and the pair of CCD cameras 34a and 34b will be referred to as the alignment position). By doing this, the planned scribing line of the mother glass substrate 90 becomes parallel to the X axial direction to which the scribe line is actually formed.

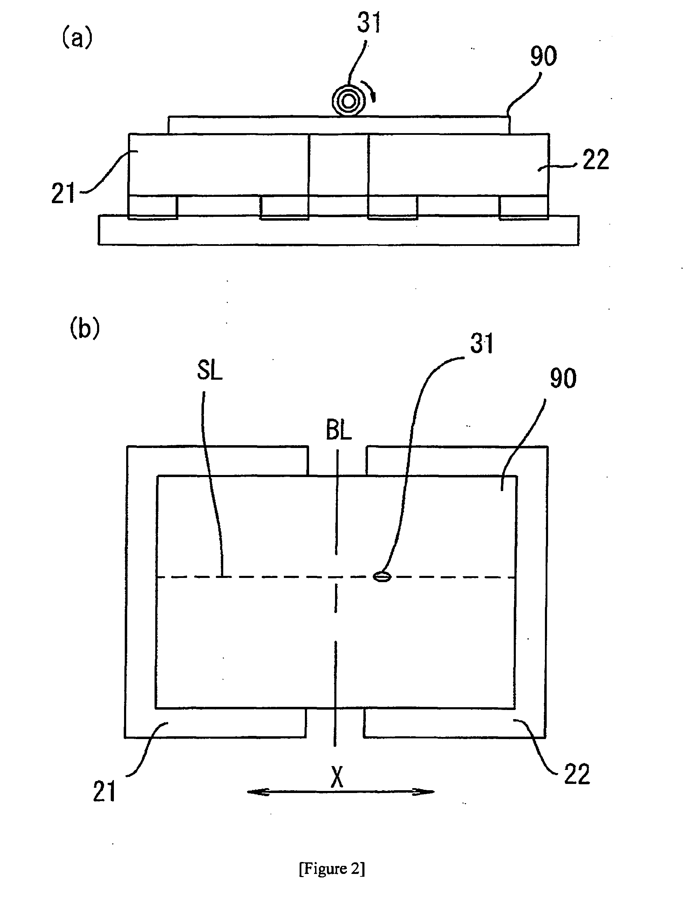

Figure 2(a) is a schematic front view of the first securing table 21 and the second securing table 22, and Figure 2(b) is a top view of Figure 2(a).

After the said alignment of substrate 90, the first securing table 21, for example, is slid a micro distance (for example, 100µm) along the X axial direction so as to approach the second securing table 22. By doing this, as shown in Figures 2(a) and 2(b), the internal stress (not shown) is equalized along the planned scribing line towards the section of the mother glass substrate 90 that is between the first securing table 21 and the second securing table 22. In this case, the second securing table 22 alone may be slid a micro distance along the X axial direction towards a static first securing table 21. Furthermore, both the first securing table 21 and the second table 22 may be slid a micro distance along the X axial direction so they mutually approach one another.

When in these conditions, the cutter wheel 31 of the scribe head 29 is positioned on the scribe line formation start position on the planned scribing line. After sliding the scribing unit 28 in the scribing direction (X axial direction), the cutter wheel tip 31 is pressed and rolled along the planned scribing line on the mother glass substrate 90. By this, a scribe line is formed along the planned scribing line (predetermined separation line).

In this case, as shown on Figure 2(b) the internal stress of the mother glass substrate 90 to which the cutter wheel 31 is rolled on is equalized along the borderline BL between the first securing table 21 and the second securing table 22. In other words, when the mother glass substrate 90 is setup on the surface of the first securing table 21 and the second securing table 22, suctioned by vacuum pumps and that alike from suction holes setup on the surfaces of the first securing table 21 and the second securing table 22, and suction-chucked to the first securing table 21 and the second securing table 22 through these means, the uneven internal stresses within the substrate can be equalized by the first securing table 21 and/or the second securing table 22 moving a micro distance along the X axial direction as mentioned above.

The micro distance to be traveled along the X axial direction by the first securing table 21 and/or the second securing table 22 will be arranged in advance when arranging scribing conditions such as: choice for a scribing cutter, edge load given to the scribing cutter for pressing the mother glass substrate 90, and scribing speed.

Furthermore, the direction of the internal stress that is generated in the mother glass substrate 90 will precisely coincide that of the scribing direction taken by the cutter wheel 31. When arranging the scribing conditions mentioned above, conditions are arranged so an unnecessary crack will not derive in front of the vertical crack formed on the mother glass substrate 90 by cutter wheel 31. Thus, a vertical crack can be precisely formed along the planned scribing line.

The example has described scribing to be done by forming an internal stress compressing the mother glass substrate 90 along the scribing direction (X axial direction) by means of the two tables 21 and 22 mutually approaching each other. However, for example, the first securing table 21 and/or the second securing table 22 may travel a micro distance along the X axial direction while mutually drawing apart from each other to form a tensile internal stress in the mother glass substrate 90.

Furthermore, it is most preferable for the size of the internal stress generated in the mother glass substrate to be a degree that will cause a slight, but not altering, distortion on the principle surface of the mother glass substrate 90. This is to prevent the mother glass substrate 90 from being separated at approximately the same time as the scribing. If the mother glass substrate is separated at approximately the same time as the scribing, there is concern that the separated glass substrate will become defective if the separated surface is affected by the internal stress in the mother substrate 90 and becomes an inclined surface.

The mother glass substrate 90 is suction-chucked to the first securing table 21 and the second securing table 22 by suction holes set up on surfaces of the first securing table 21 and the second securing table 22 that suction the mother glass substrate 90 with vacuum pumps and alike. When this happens, by moving the first securing table 21 and/or the second securing table 22 for a micro distance along the X axial direction as mentioned above, internal stress becomes equalized. In this manner, the example equalizes internal stress immanent in the mother glass substrate 90. Scribing is then conducted in this state, and thus the generation of unnecessary cracks can be secured under control.

### <Embodiment 1>

Embodiment 1 represents an example of a scribing apparatus, wherein equalizing of internal stress near the planned scribing line is carried out by either compressing or pulling a brittle material substrate in advance towards a direction perpendicular to the scribing direction. In addition, Embodiment 1 will represent an example of a scribing apparatus consisting of an internal stress detection means.

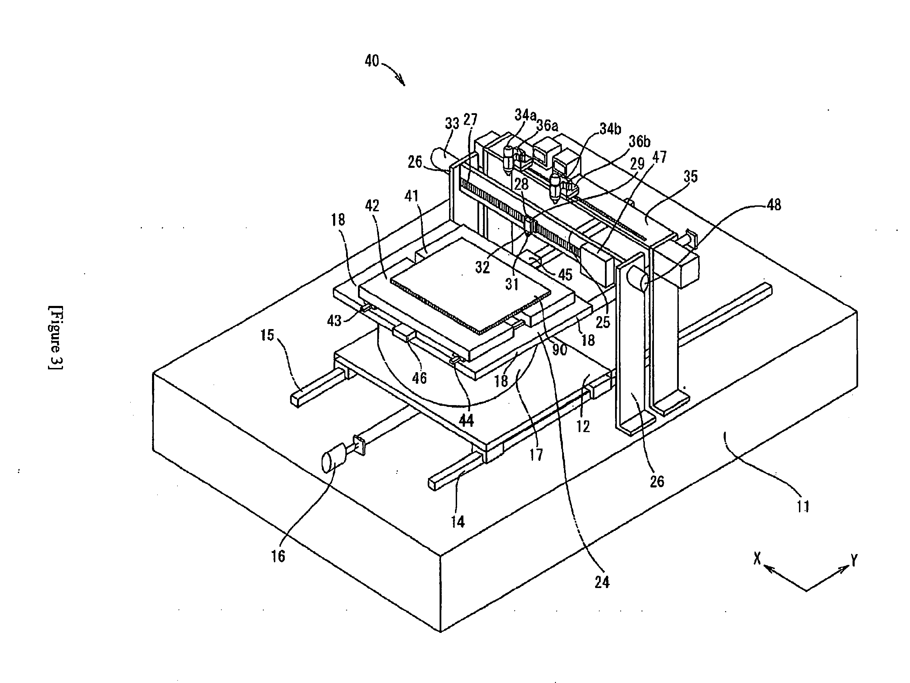

Figure 3 is a schematic structural perspective view showing the scribing apparatus. This scribing apparatus 40 does not have any structural differences from the scribing apparatus of the example shown in Figure 1, aside from the structure of the first securing table and the second securing table, and that a distortion detection unit 47 for detecting distortions on the surface of mother glass substrate 90 will travel along guide bar 25. For this reason, detailed explanations of the parts that are unchanged will be omitted by utilizing the same numerical codes for the same components.

The subtable 18 consists a pair of tables, the first securing table 41 and the second securing table 42, which are reciprocally movable in a horizontal state along the Y axial direction. The first securing table 41 and the second securing table 42 are supported by a pair of guide rails 43 and 44, which are provided over the upper surface of the subtable 18 and extend in the Y axial direction while remaining parallel to each other. The supported securing tables become horizontally slidable along each of the guide rails 43 and 44, and are slid by drive mechanisms 45 and 46 such as a ball screw/motor or a linear motor. All other structures are in common with the example shown in Figure 1, and thus explanations are omitted.

Furthermore, a distortion detection unit 47 is set up on the guide rail 27 and is slidable in the X axial direction. The distortion detection unit 47 can be moved in the X axial direction by, for example, drive mechanisms such as motor 48 and a ball screw (not shown).

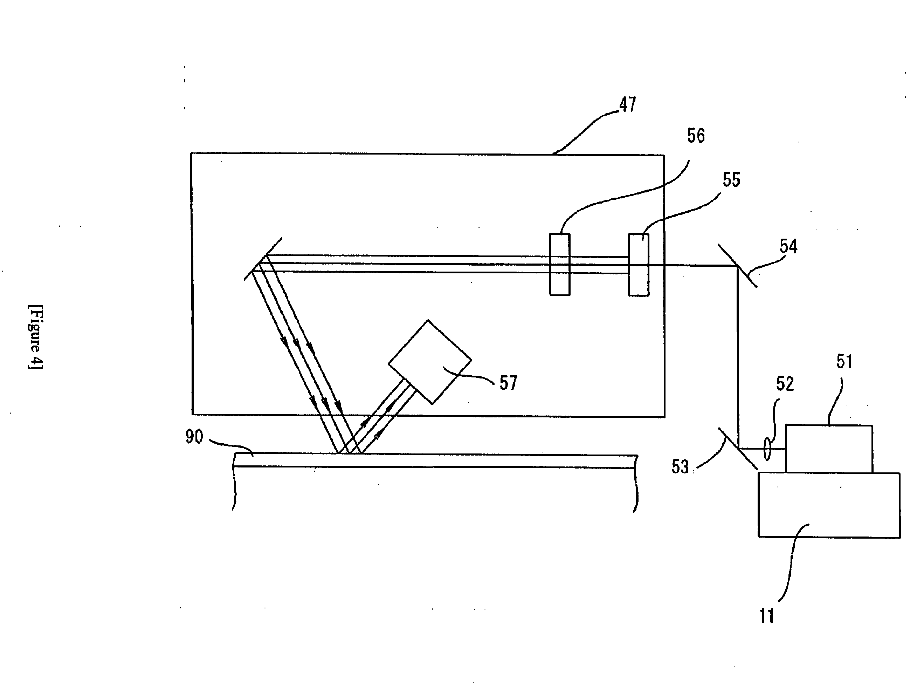

Figure 4 is a schematic structural view showing the structure of the distortion detection unit 47.

A laser light emitted from a diode laser 51 provided on base 11 is narrowed by a convex lens 52, and input into distortion detection unit 47 by bending mirror 53 and bending mirror 54. After being input, the laser light forms a plurality of laser light groups lined in a single parallel row by passing through the first etalon 55. This row made of a plurality of laser lights then passes through the second etalon 56 to form a batch of laser light groups lined in several rows. This single batch of laser light groups then irradiates to, and reflects off, the surface of the mother glass substrate 90 and is then detected by CCD camera 57. The strength signals of these are then processed by an image processor (not shown), analyzed by an arithmetic processing unit (not shown), and microscopic displacements that had generated on the mother glass substrate 90 are detected.

All other structures of the apparatus are in common with the scribing apparatus in the example shown in Figure 1, and thus detailed explanations are omitted.

A method of forming a scribe line on the mother glass substrate 90 by utilizing a scribing apparatus with the foregoing structure is explained below.
First, as shown in Figure 3, the first securing table 41 and the second securing table 42 are arranged in a position accordingly adapted to the size of the mother glass substrate 90 in the Y axial direction. At the same time, spacing between the first securing table 41 and the second securing table 42 is adjusted.

When in these conditions, the mother glass substrate 90 is provided on top of the first securing table 41 and the second securing table 42. The vacuum pump (not shown) will then be driven so that the mother glass substrate 90 is suctioned by the suction holes setup on the surface of the securing table 41 and the second securing table 42, and becomes adsorbed and fixed to the first securing table 41 and the second securing table 42.

After this, in order to coincide the line connecting the image center of the CCD camera 34a and CCD camera 34b with the planned scribing line, the positions of the CCD camera 34a and CCD camera 34b on the Y axial direction are adjusted by correspondingly utilizing the oscillatory tables 36a and 36b. After this, the CCD camera 34a and the CCD camera 34b are individually moved in the X axial direction, the slidable table 12 is moved in the Y axial direction, and the subtable 18 is rotated. By these means, the central position of the pair of alignment marks provided on the mother glass substrate 90 in the image center of CCD camera 34a and CCD camera 35b coincide. Thus, the planned scribing line of the mother glass substrate 90 becomes parallel to the X axial direction to which the scribe line is actually formed.

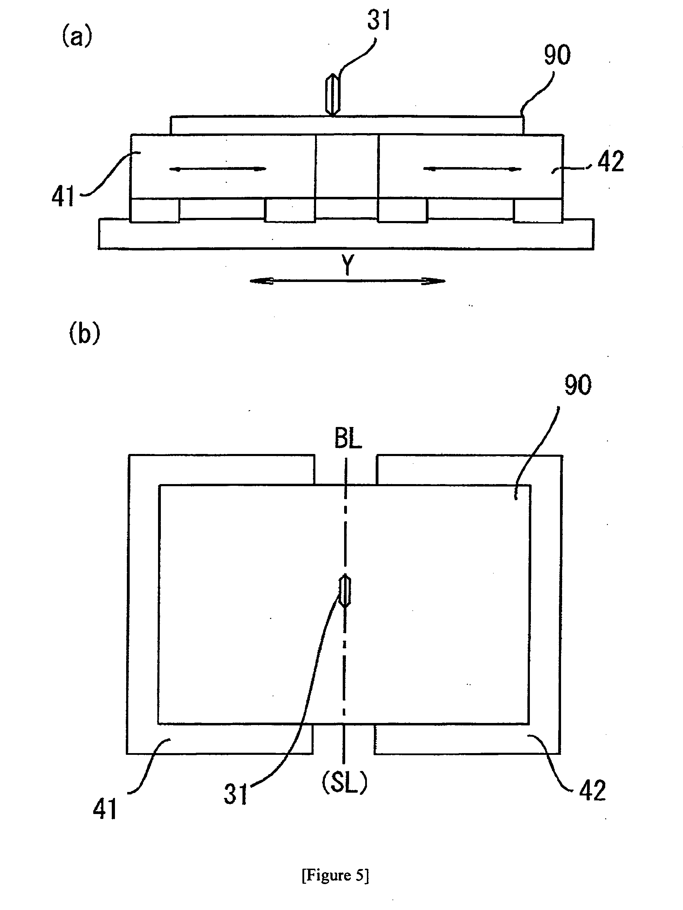

Figure 5(a) is a front view of the first securing table 21 and the second securing table 22, and Figure 5(b) is a top view of Figure 5(a). After the said alignment of the mother glass substrate 90, the first securing table 41, for example, is slid for a micro distance (for example, 100µm) along the Y axial direction to approach the second securing table 42. By doing this, as shown in Figures 5(a) and 5(b), the internal stress (not shown) is equalized along the planned scribing line SL towards the section of the mother glass substrate 90 between the first securing table 41 and the second securing table 42.

In this case, it is also possible to slide the second securing table 42 alone for a micro distance along the Y axial direction. Furthermore, it is also possible to slide both the first securing table 41 and the second table 42 for a micro distance along the Y axial direction so they mutually approach one another.

As mentioned above, when internal stress is generated almost evenly throughout the entire mother glass substrate 90, distortions on the mother glass substrate 90 (the amount of micro displacements on the surface of the mother glass) are detected. This is done by first moving the slidable table 12 in the Y axial direction until the planned scribing line SL of the mother glass substrate 90 coincides with the irradiation line of the single batch of laser light in the distortion detection unit 47, and following this by moving the distortion detection unit 47 along the X axial detection. At this time, in order to maximize the absolute value of displacements in the Y axial direction on the planned scribing line, move the first securing table 41 and/or the second securing table 42 along the Y axial direction. By doing this, the distance interval between the first securing table 41 and the second securing table 42 is adjusted.

In other words, in regards to the planned scribing line SL on the mother glass substrate 90, the strength of the internal stress along the Y axial direction is equalized along the planned scribing line SL on the mother glass substrate 90 by adjusting the distance interval between the first securing table 41 and the second securing table 42.

After these conditions are achieved, the cutter wheel 31 in the scribe head 29 is positioned on the scribe line formation start position on the planned scribing line. A scribing unit 28 is then slid in the scribing direction (X axial direction), and the cutter wheel 31 is pressed and rolled along the planned scribing line on the mother glass substrate 90. By doing this, a scribe line is formed along the planned scribing line SL (planned separation line).

At this time, internal stress of the mother glass substrate 90 on which the cutter wheel 31 is pressed and rolled on is equalized along the Y axial direction that sandwiches the border line BL between the first securing table 41 and the second securing table 42.

In addition, in order to prevent unnecessary cracks from preceding and continuously deriving (to prevent the cracks from forerunning) on a vertical crack formed during the scribing process, the micro distance to be traveled by the first securing table 41 and/or the second securing table 42 along the Y axial direction is accordingly arranged in advance when arranging scribing conditions such as: the scribing cutter to be used, the edge load given to the scribing cutter for pressing the mother glass substrate 90, and the scribing speed.

Furthermore, it is most preferable for the size of the internal stress generated in the mother glass substrate 90 to be a degree that will cause a slight, but not altering, distortion on the principle surface of the mother glass substrate 90. This is to prevent the mother glass substrate 90 from being separated at approximately the same time as the scribing. If the mother glass substrate is separated at approximately the same time as the scribing, there is concern that the separated glass substrate will become defective if the separated surface is affected by the internal stress in the mother substrate 90 and becomes an inclined surface.

In Embodiment 1 of the present invention, by means of the first securing table 41 and/or the second securing table 42 traveling a micro distance along the Y axial direction, border line BL in the direction of the internal stress generating within the mother glass substrate 90 will coincide with the planned scribing line. At the same time, as the abovementioned micro distance is arranged to prevent an unnecessary crack from forerunning when scribing, there is little concern that an unnecessary crack that is out of alignment with the planned scribing line SL will continuously derive from the vertical crack formed by the cutter wheel 31 on the mother glass substrate 90. Thus, a vertical crack can be formed with certainty along the planned scribing line SL.

Embodiment 1 of the present invention has described scribing to be done by forming an internal stress compressing the mother glass substrate 90 along the scribing direction (X axial direction) by means of two tables 41 and 42 mutually approaching each other. However, for example, the first securing table 41 and/or the second securing table 42 may travel a micro distance along the Y axial direction in a manner mutually drawing apart from each other to form a tensile internal stress in the mother glass substrate 90.

### <Embodiment 2>

Embodiment 2 represents an example of a scribing apparatus that carries out an equalizing of internal stress near the planned scribing line by either compressing or pulling in advance the brittle material substrate at a 45° angle horizontally inclined to the scribing direction.

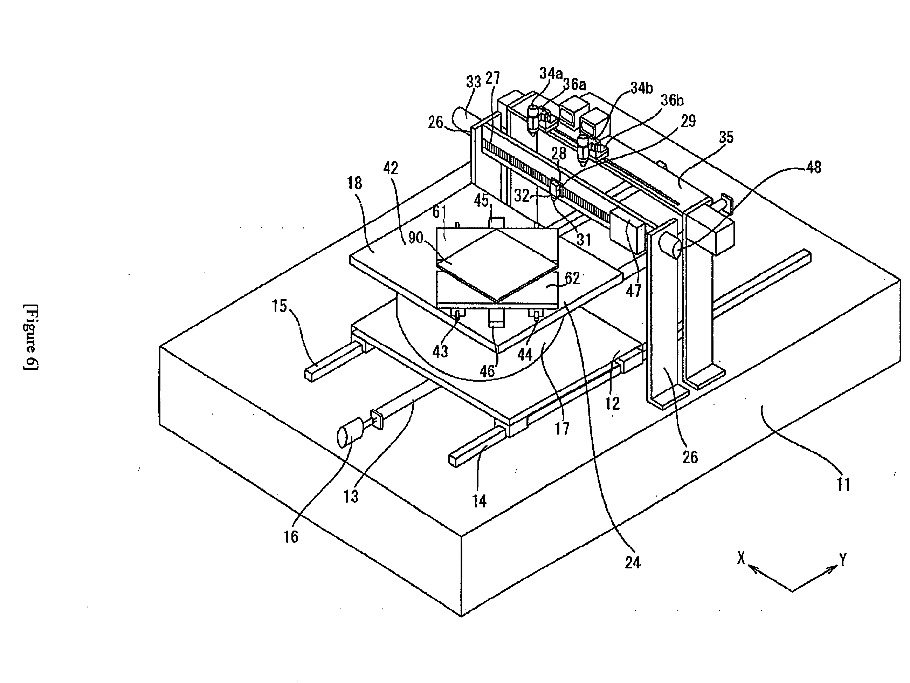

Figure 6 is a schematic structural perspective view showing another Embodiment of the scribing apparatus of the present invention. This scribing apparatus 60 does not have any structural differences from the scribing apparatus of Embodiment 1 shown in Figure 3, aside from the structures of the first securing table and the second securing table, and also that the direction of travel by the first securing table and the second securing table is arranged to be at a 45° inclined angle to the X axial direction perpendicular to the sliding direction of the slidable table 12. For this reason, detailed explanations of the parts that are unchanged will be omitted by utilizing the same numerical codes for the same components.

The direction of travel by the first securing table 61 and the second securing table 62 is arranged to be at a 45° inclined angle to the X axial direction perpendicular to the sliding direction of the slidable table 21. By mutually approaching or mutually spacing the first securing table 61 and the second securing table 62 to each other while both correspondingly suction-chuck the mother glass substrate 90, internal stress is generated throughout the mother glass substrate 90 along the direction of travel by the first securing table 61 and the second securing table 62. In these conditions, scribing is done on the mother glass substrate 90 mounted on the first securing table 61 and the second securing table 62.

In this case therefore, an internal stress will be generated along a direction at a angle 45° inclined to the X axial direction throughout the entire mother glass substrate 90 to which the cutter wheel 31 is to be pressed and rolled on. The internal stress sandwiches the borderline BL between the first securing table 61 and the second securing table 62 and mutually faces reverse directions. In other words, when the mother glass substrate 90 is set up on the surface of the first securing table 61 and the second securing table 62 and suction-chucked to the first securing table 61 and the second securing table 62 by suctioning via vacuum pumps and that alike from suction holes setup on the surfaces of the first securing table 61 and the second securing table 62, internal stress is generated within the mother glass substrate 90. This in turn is equalized in a direction at an angle 45° inclined to the X axial direction by moving the first securing table 61 and/or the second securing table 62 for a micro distance along a 45° angle inclined to the X axial direction as mentioned above. The micro distance traveled by the first securing table 61 and/or the second securing table 62 along a direction at a 45° inclined angle to the X axial direction is arranged in advance when arranging scribing conditions such as: the selection of a scribing cutter, the edge load given to the scribing cutter for pressing the mother glass substrate 90, and the scribing speed. This is to prevent unnecessary cracks from continuously deriving on a vertical crack formed during the scribing process.

Furthermore, when arranging the abovementioned scribing conditions, conditions are set up so a crack will not derive in front of the vertical crack formed on the mother glass substrate 90 by cutter wheel 31. Thus, a vertical crack can be precisely formed along the planned scribing line SL.

Furthermore, it is most preferable for the size of the internal stress generated in the mother glass substrate 90 to be a degree that will cause a slight, but not altering, distortion on the principle surface of the mother glass substrate 90. This is to prevent the mother glass substrate 90 from being separated at approximately the same time as the scribing. If the mother glass substrate is separated at approximately the same time as the scribing, there is concern that the separated glass substrate will become defective if the separated surface is affected by the internal stress in the mother substrate 90 and becomes an inclined surface

Embodiment 2 of the present invention describes scribing to be done by forming an internal stress compressing the mother glass substrate 90 along a direction at a 45° inclined angle to the scribing direction (X axial direction). However, for example, the first securing table 61 and/or the second securing table 62 may travel a micro distance along a parallel direction and at a 45° inclined angle to the X axial direction to mutually draw apart from each other and form a tensile internal stress in the mother glass substrate 90.

Furthermore, the angle of the direction that the first securing table 61 and the second securing table 62 travels, is not limited to a 45° inclined angle when inclining in a horizontal direction to the scribing direction (X axial direction), and can be arranged at various angles coinciding to the scribing condition of the mother glass substrate.

The mother glass substrate 90 is set up on and suction-chucked to the first securing table 61 and the second securing table 62 by suction holes setup on surfaces of the first securing table 61 and the second securing table 62 that suction the mother glass substrate 90 with vacuum pumps and alike. When this happens, by moving the first securing table 61 and/or the second securing table 62 as above mentioned for a micro distance along a direction that is parallel to and inclined in a predetermined angle to the scribing direction (X axial direction), and organized towards a direction that is parallel and inclined in a predetermined angle to the scribing direction (X axial direction). In this manner, Embodiment 2 of the present invention equalizes ununiform internal stress immanent in the mother glass substrate 90. Scribing is then conduct on the mother glass substrate 90 in this state.

### <Embodiment 3>

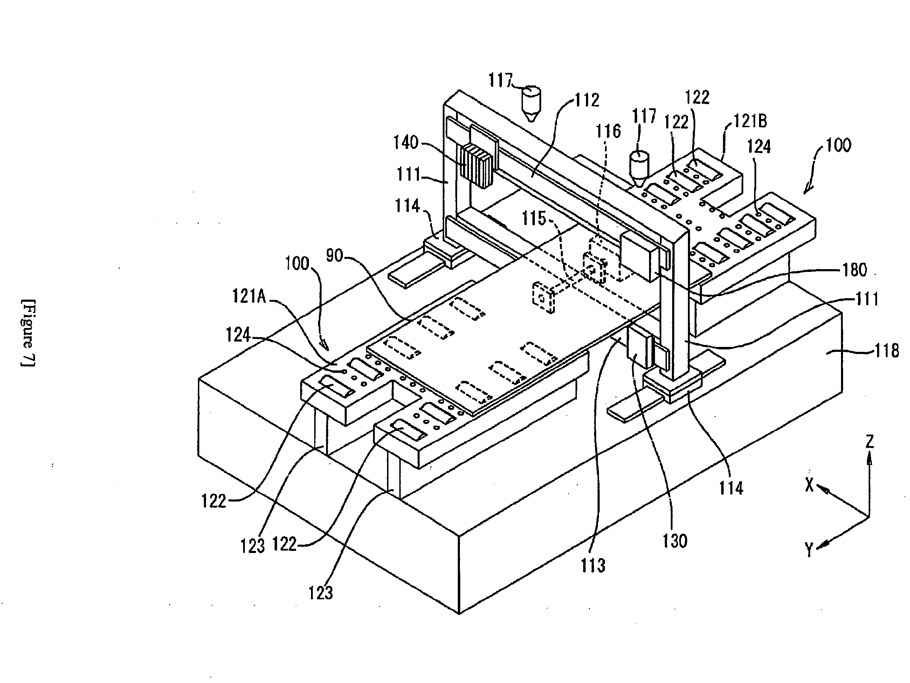

Embodiment 3 represents an example of a separation device for brittle material substrates that combines a breaking mechanism to a scribing apparatus. Figure 7 is a perspective view showing a schematic structure of a separation system 100 for brittle material substrates. The system forms scribe lines on a brittle material substrate by utilizing the scribing method of the present invention, while subsequently comprising a breaking mechanism for breaking the brittle material substrate. The separating device is employed when, for example, separating a mother glass substrate 90 that is a brittle material substrate into predetermined sizes to be used for a liquid crystal display panel.

In the separation system 100, the mother glass substrate 90 to be separated is horizontally mounted on a pair of substrate-supporting mechanisms 120, set up on base 118. At the same time, a scribing unit 130 and a breaking unit 140 are set up between the two substrate-supporting mechanisms 120. These units will scribe and separate the mother glass substrate 90 while it is supported in a spanned state by the two substrate-supporting mechanisms 120.

Each of the substrate-supporting mechanisms 120 correspondingly consist a first securing table 121a and a second securing table 121b for mounting the mother glass substrate 90. The first securing table 121a and the second securing table 121b are slidable in the substrate transporting direction (Y axial direction indicated in Figure 7) as each is supported by a pair of supports 123 that are horizontally set up on base 118. The first securing table 121a and the second securing table 121b each slide against the pair of supports 123 along the Y axial direction by means of slide driving mechanisms that are not shown in the Figure, such as a linear motor.

The first securing table 121a and the second securing table 121b rotatably set up a plurality of transportation rollers 122 therein. The rollers transport the mounted mother glass substrate 90 along the Y axial direction. The axial directions of each of the corresponding transportation rollers 122 are along the X axial direction in a perpendicular state to the sliding direction (Y axial direction) of the first securing table 121a and the second securing table 121b. The rollers form a plurality of lines along the Y axial direction (in the case of Figure 7, two lines are formed), and in each line, the corresponding transportation rollers 122 are provided with fixed spacing in-between adjacent transportation rollers 122. Each transportation roller 122 also possesses a vertical movement device not shown in the figure that conducts vertical movement using means of driving mechanisms correspondingly utilizing air cylinders and motors. By means of the vertical movement device, the upper section of each of the transportation rollers 122 can be from a state wherein protruding above the upper surface of the first securing table 121a and the second securing table 121b to a state wherein not protruding above the upper surface of the first securing table 121a and the second securing table 121b.

Furthermore, the first securing table 121a and the second securing table 121b each have a plurality of suction holes 124 that are correspondingly set up to suction and adsorb the mother glass substrate 90 mounted thereon.

Figure 8(a) is a schematic structural view of the adsorption mechanism set up on the first securing table 121a and the second securing table 121b. Figure 8(b) is a plan view of Figure 8(a).

In the same way that adsorption mechanisms employed in conventional separating devices for glass substrates are, this adsorption mechanism consists of a plurality of suction holes 124 with openings on the upper surface of the first securing table 121a and the second securing table 121b. The mechanism also consists of suction means 125, such as a vacuum pump or a suction motor, which create a state of negative pressure within the suction holes 124.

Returning to Figure 7, the scribing unit 130 and the breaking unit 140 are attached to and slidable along the upper guide rail 112 and lower guide rail 113. The units are slidable by means of, for example, a linear motor mechanism. The guide rails are provided along the X axial direction, perpendicular to the direction the mother glass substrate 90 is transported by the substrate supporting mechanism 120. Each of the ends of upper guide rail 112 horizontally span between the upper sections of the pair of pillars 111 that are vertically set up on base 118. Each of the ends of lower guide rail 113 horizontally span between the lower sections of the pair of pillars 111.

Each of the pillars 111 are slidable along the Y axial direction against the upper surface of base 118 by means of slider 114.The Y axial direction is perpendicular to the direction of the upper guide rail 112 and lower guide rail 113. Each of the pillars 111 are integrally structured with the upper guide rail 112 and lower guide rail 113. Thus by each of the pillars 111 sliding with support from slider 114, the upper guide rail 112 and lower guide rail 113 will become integral and also slide along the Y axial direction.

The lower guide rail 113 is provided between the lower sections of each of the pillars 111. On the lower section of the longitudinal central section of the lower guide rail 113, a drive unit for linear interpolation is set up. The drive unit for linear interpolation possesses a ball screw 115 along the Y axial direction perpendicular to the lower guide rail 113. The ball screw 115 is able to rotate in either direction of rotation by motor 116. Ball screw 115 is engaged by a ball nut (not shown) attached on the longitudinal central section of the lower guide rail 113. When ball screw 115 is rotated by motor 116, momentum going along the transportation direction of the mother glass substrate 90 is applied to the lower guide rail 113. Through this, each of the pillars 111 that are slidably supported by the slider 114 will slide in a direction perpendicular to the upper guide rail 112 and the lower guide rail 113.

In the vicinity of the upper guide rail 112, a pair of positioning cameras 117 are set up in the longitudinal direction of the upper guide rail 112 with spacing that is adapted to the size of the mother glass substrate 90. The positioning cameras image alignment marks, set up on the mother glass substrate 90 to calculate tilting regarding the upper guide rail 112 and the lower guide rail 113 against the mother glass substrate 90.

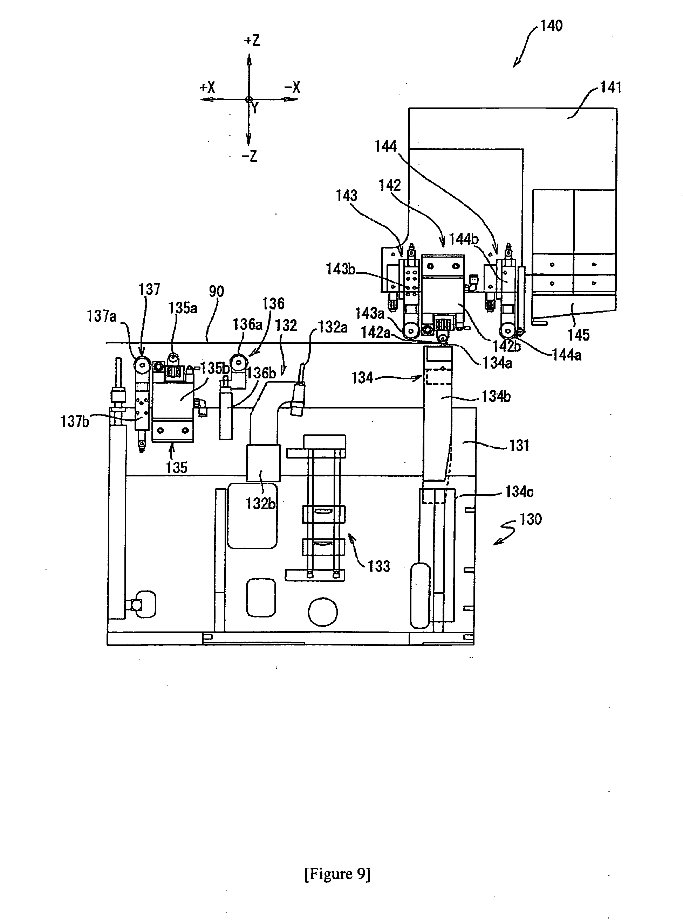

Figure 9 is a front view showing the structures of the scribing unit 130 and the breaking unit 140. First, the scribing unit 130 is described. As shown in Figure 7, each mechanism of the scribing unit 130 described hereafter travels along the lower guide rail 113 in an integrate fashion with the scribing unit 130.

As shown in Figure 9, the scribing unit 130 is set up below the mother glass substrate 90 to be transported. The scribing unit 130 is made of a unit body 131 slidably attached to the lower guide rail 113; and virtually in the central section of this unit body 131, a cooling mechanism 132 for spraying cooling water upward. Also comprised within and arranged beside one side of the cooling mechanism 132 is a laser beam irradiation optical system 133 for irradiating laser beams upward. The laser beam irradiation optical system 133 irradiates laser beams to the mother glass substrate 90 fixed in a spanned state by means of a pair of substrate supporting mechanisms 120. The cooling mechanism 132 sprays cooling water on the area near to the section of the mother glass substrate 90 to which the laser irradiates.

Beside the cooling mechanism 132 but opposite to the side of the laser beam irradiation optical system 133, a cutting mechanism 134 for an incision is set up. The mechanism forms a vertical crack (incision) on the scribing starting location of the mother glass substrate 90 to act as a trigger for the scribing procedure. The cutting mechanism for an incision 134 possesses a blade section 134a provided along the sliding direction of the scribing unit 130. This blade section 134a is attached on the upper end of bracket 134b with the edge of the blade facing upward. Bracket 134b is to be vertically moved by means of an air cylinder for vertical movement 134c set up on the unit body 131.

Cooling mechanism 132 possesses a nozzle 132a that sprays cooling water upwards. By means of air cylinder 132b this nozzle 132a is able to vertically move between a spraying position near the mother glass substrate 90 on which the nozzle 132a sprays cooling water onto, and a stand-by position below and separate from the mother glass substrate 90.

Beside the cooling mechanism 132 but opposite to the side of the laser beam irradiation optical system 133, a substrate securing roller mechanism 135 is set up. Between the substrate securing roller mechanism 135 and the cooling mechanism 132, the first auxiliary roller mechanism 136 is set up; and against the substrate securing roller mechanism 135 but on the other side of the first auxiliary roller mechanism 136, the second auxiliary roller mechanism 137 is set up.

In regards to the first auxiliary roller mechanism 136, the first auxiliary roller 136a is rotatably attached on the upper end of the air cylinder 136b for vertical movement, which in turn is attached to the scribing unit body 131. The first auxiliary roller 136a is attached with the axial direction thereof perpendicular to the sliding direction of the scribing unit 130 (X axial direction).

The substrate securing roller mechanism 135 and the second auxiliary roller mechanism 137 are attached to the scribing unit body 131. The substrate securing roller mechanism 135 has the same structure as the pressing roller mechanism 142, described hereafter. In this structure, a head unit 135b set up therein is vertically movable by motors not shown on the Figure, while a roller for substrate securing 135a is rotatably attached on a roller holder. The roller for substrate securing 135a is attached with the axial direction thereof perpendicular to the sliding direction of the scribing unit 130 (X axial direction).

The second auxiliary roller mechanism 137 also has an air cylinder for vertical movement 137b set up thereon. Similarly, a second auxiliary roller 137a is also rotatably attached on the upper end of the air cylinder 136b for vertical movement. The second roller 137a is also attached with the axial direction thereof perpendicular to the sliding direction of the scribing unit 130 (X axial direction).

The second auxiliary roller 137a is provided near the roller for substrate securing135a. However, the first auxiliary roller 136a is provided away from the roller for substrate securing 135a, and has wider spacing in between it and the roller for substrate securing 135a than that between the roller for substrate securing135a and the second auxiliary roller 137a.

Next, the breaking unit 140 is described. As shown in Figure 7, each mechanism of the breaking unit 140 described hereafter travels along the upper guide rail 112 in an integrated fashion with the breaking unit 140.

As shown in Figure 9, the breaking unit 140 set up on the upper guide rail 112 possesses the following: a breaking unit body 141 slidable against the upper guide rail 112, a pressure roller mechanism 142 attached on the breaking unit body 141, a pressing-side first auxiliary roller mechanism 143 set up beside one side of the pressure roller mechanism 142, and a pressing-side second auxiliary roller mechanism 144 set up beside the opposite side of the pressure roller mechanism 142. The pressure roller mechanism 142, pressing-side first auxiliary roller mechanism 143, and pressing-side second auxiliary roller mechanism 144 are all attached to the breaking unit body 141. When the pressure roller 142a of the pressure roller mechanism 142 is in an opposing state with the substrate securing roller 135a of the substrate securing roller mechanism 135 from the scribing unit 130, the pressing-side first auxiliary roller 143a of the pressing-side first auxiliary roller mechanism 143 and the pressing-side second auxiliary roller 144a of the pressing-side second auxiliary roller mechanism 144 will each be provided in a manner opposing the second auxiliary roller 137a of the second auxiliary roller mechanism 137 and the first auxiliary roller 136a of the first auxiliary roller mechanism 136 from the scribing unit 130.

The substrate securing roller mechanism 135 set up on the aforementioned scribing unit 130 also has a similar structure to that of the pressure roller mechanism 142, aside from the top and bottom sections being reversed.

As shown in Figure 9, an air cylinder 143b for vertical movement is set up in the pressing-side first auxiliary roller mechanism 143. On the lower end of this air cylinder 143b a pressing-side first auxiliary roller 143a is rotatably attached. When breaking the mother glass substrate 90, the pressing-side first auxiliary roller 143a will be opposing the second auxiliary roller 137a of the second auxiliary roller mechanism 137 from the scribing unit 130.

An air cylinder 144b for vertical movement is set up in the pressing-side second auxiliary roller mechanism 144. On the lower end of this air cylinder 144b a pressing-side second auxiliary roller 144a is rotatably attached. When breaking the mother glass substrate 90, the pressing-side second auxiliary roller 144a will be opposing the first auxiliary roller 136a of the first auxiliary roller mechanism 136 from the scribing unit 130.

In the breaking unit 140, a laser beam/cooling water receiving unit 145 is set up beside the pressure roller mechanism 142 but on the opposite side that the pressing-side auxiliary roller mechanism 143 is set up on. The unit is for receiving laser beams irradiated by the laser beam irradiation optical system 133 as well as cooling water sprayed by cooling mechanism 132, which are both set up in the scribing unit 130.

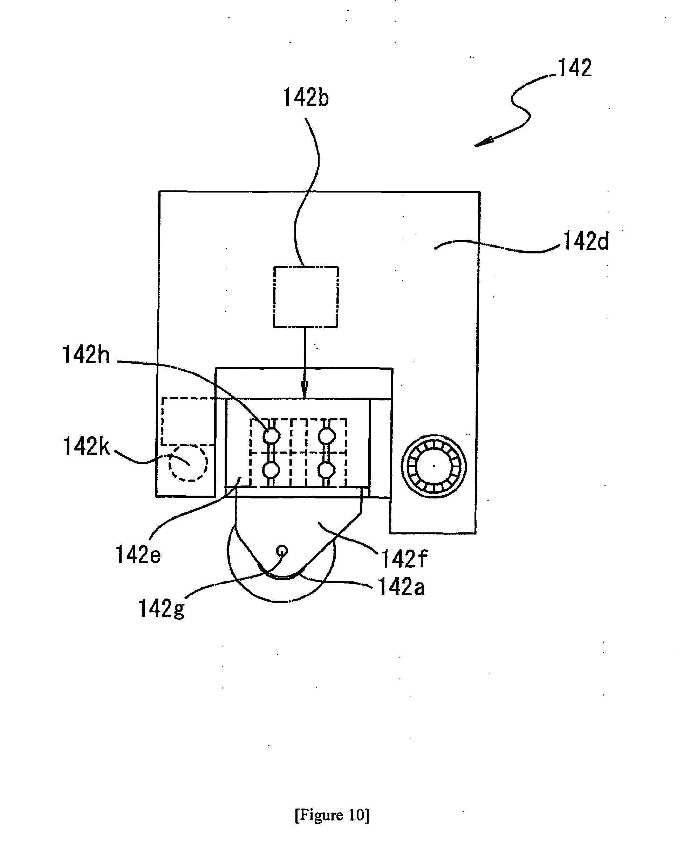

Figure 10 is a front view showing the structure of the pressure roller mechanism 142. Pressure roller mechanism 142 includes therein a pressure roller 142a, air cylinder 142b, head unit 142d, slide block 142e, roller holder 142f, supporting shaft 142g, bearing 142h, and stopper 142k.

The slide block 142e is rotatably attached on the head unit 142d, and an urging force is added thereto by means of air cylinder 142b set up on the head unit 142d. On the slide block 142e, a roller holder 142f is attached and is rotatable around a vertical axis via bearing 142h. The roller holder 142f protrudes below the slide block 142e. On the lower end of the roller holder 142e, the supporting shaft 142g is horizontally set up. The pressure roller 142a is rotatably attached to this supporting shaft 142g, and during the separating process of the mother glass substrate 90, the pressure roller 142a is opposing the roller for substrate securing 135a.

A stopper 142k is set up on the head unit 142d, and it detects the position (height) of the head unit 142d when the pressure roller 142a makes contact with the mother glass substrate 90. When the head unit is lowered by a motor (not shown) in the pressure roller mechanism so the pressure roller 142a contacts a side of the principle surface of the mother glass substrate 90 at a predetermined pressure, a micro current is already running between the stopper 142k and the slide block 142e. Stopper 142k detects the change from a state wherein the slide block 142e is making contact with the stopper 142k, to a state wherein they are apart. Additionally, the stopper 142k also functions as a stopper in regards to rotation movement by the slide block 142e.

When a change from a state wherein the slide block 142e is making contact with the stopper 142k, to a state wherein they are apart, is detected, the position of the head unit 142d in the Z direction is calculated by a control unit. This control unit will drive a motor so the motor vertically moves the head unit 142d. For example, the position (at zero) of a vertical direction (Z direction) of the head unit 142d with respect to the glass substrate surface when the pressure roller 142a makes contact with the mother glass substrate 90, can be derived. Thereafter, the amount (distance) the pressure roller 142a will be pressing against the mother glass substrate 90 is arranged based on this detected position at zero.

The structure of the substrate securing roller mechanism 135 is the same as, for example, the pressure roller mechanism 32 aside from the top and bottom being reversed.

In cases when the pressing means (for example, pressure roller mechanism 142) are rolled along the scribe line, the pressing means can be easily moved along the scribe line. Furthermore, when the pressing means is a roller, the pressing means can be easily rolled along the scribe line.

The distortion detection unit 180 utilizes the same unit as the distortion detection unit 47 of Embodiment 2. Therefore, the unit consists of the same detection mechanisms shown in Figure 4 to detect the distortion on the surface of the mother glass substrate 90. Thus, a detailed explanation of these are omitted here.

The movement of the separation system 100 for a brittle material substrate with these foregoing structures is described hereon.

In Figure 7, first of all, each of the transportation rollers 122 in each of the substrate supporting mechanisms120 are correspondingly elevated so as to protrude from the upper surface of the first securing table 121a and the second securing table 121b. In these conditions, the mother glass substrate 90 is transported onto the first securing table 121a in one side of the substrate supporting mechanism 120, and each transportation roller 122 in the substrate supporting mechanism 120 thereof supports mother glass substrate 90. When under these conditions, by means of rotation by each transportation roller 122, the mother glass substrate 90 is transported onto each transportation roller 122 of the second securing table 121b in the other side of the substrate supporting mechanism 120. Then, the mother glass substrate 90 becomes spanned between both substrate supporting mechanisms 120, and when the predetermined planned scribing line on the mother glass substrate 90 is transported to a predetermined position between both substrate supporting mechanisms 120, all of the transportation rollers 122 in each of the substrate supporting mechanism 120 are lowered. The mother glass substrate 90, still in a spanned state between the supporting tables 121 of each substrate supporting mechanisms 120, is then mounted onto both supporting tables 121.

Subsequently, the vacuum pump 125, an absorption mechanism for each substrate supporting mechanism 120, is driven, and sections of the mother glass substrate 90 that are mounted on the first securing table 121a and the second securing table 121b are respectively adsorbed and fixed onto the first securing table 121a and the second securing table 121b.

When in these conditions, the first securing table 121a and the second securing table 121b are approached to each other. Hereby, as shown in Figure 8(b), an internal stress represented by arrow A is generated towards the section of the mother glass substrate 90 between the first securing table 121a and the second securing table 121b throughout the entire mother glass substrate 90.

For example, the first securing table 121a slides a micro distance (ex: 100µm) along the Y axial direction to approach the second securing table 121b. Hereby, as shown in Figure 8(b), internal stress is equalized along the planned scribing line in a direction towards the section of the mother glass substrate 90 between the first securing table 121a and the second securing table 121b. In this case, the second securing table 121b alone may also slide a micro distance along the Y axial direction, or both the first securing table 121a and the second securing table 121b may slide a micro distance along the Y axial direction to approach one another mutually.

When in these conditions, the control unit will calculate the tilt against the X axial direction by the mother glass substrate 90, as well as the starting position and the finishing position of scribing on the mother glass substrate 90. These calculations are based on photographic images, the glass size of the mother glass substrate 90 that are imaged by the positioning cameras 117, and positional data from the alignment marks set up on the mother glass substrate 90, as well as other factors. With these means, the planned scribing line is arranged on the mother glass substrate 90.

Next, when the distortion detection unit 180 is moved along the planned scribing line arranged on the mother glass substrate 90, the distortion detection unit 180 is to move along the X axial direction so the irradiation line for the batch of laser light will coincide with the planned scribing line on the mother glass substrate. At the same time, each of the pillars 111 that are slidable with support from the slider 114 is to be moved along the Y axial direction. Then, the distortion detection unit 180 detects distortion on the mother glass substrate 90 (micro displacements on the surface of the mother glass substrate 90). At this time, the first securing table 121a and/or the second securing table 121b will be moved for a micro distance along the Y axial direction to minutely adjust the spacing between the first securing table 121a and the second securing table 121b. This will maximize the absolute value of the displacement in the Y axial direction within the range detected on the planned scribing line by the laser irradiation. The position of the mother glass substrate 90 remains unchanged even if the spacing between the first securing table 121a and the second securing table 121b are adjusted.

Adjustments of the spacing between the first securing table 121a and the second securing table 121b are carried out so displacement is at a maximum on the surface of the mother glass substrate 90 on which the planned scribing line of the mother glass substrate is positioned. In other words, adjustments are carried out so the planned scribing line SL for the mother glass substrate 90 becomes the border line BL between the first securing table 121a and the second securing table 121b when internal stress along the Y axial direction is being equalized.

Subsequently, as shown in Figure 9, the breaking unit 140 is slid from its stand-by position located at the end of one side(the +X side) of the upper guide rail 112, to the edge of the -X side of the mother glass substrate 90. Thus, the pressure roller 142a will be in a state wherein opposing the scribing start location of the mother glass substrate 90. Furthermore, the scribing unit 130 will also be slid from its stand-by position located at the end of one side (the -X side) of the lower guide rail 113 to the edge of the -X side of the scribing start location of the mother glass substrate 90. Thus, the cutting mechanism 134 for an incision becomes positioned beside the scribing start location of the mother glass substrate 90.

Then, a vertical movement motor (not shown) in the pressure roller mechanism lowers the pressure roller 142a of the breaking unit 140, and the roller is pressed onto the upper surface of the mother glass substrate 90. At the same time, the air cylinder 134b for vertical movement elevates the cutting mechanism 134 for an incision positioned in the scribing unit 130. Also, the scribing unit 130 and the breaking unit 140 are slid for a predetermined distance towards the scribing direction (+X axial direction) in synchronization with each other to form a cut on the scribing start position on the mother glass substrate 90 by means of the blade unit 134a on the cutting mechanism 134 for an incision. Hereby, the blade unit 134a of the cutting mechanism 134 for an incision will form a cut of a prescribed length along the scribing start position of the mother glass substrate 90 while the pressure roller 142a secures the substrate.

Herewith, when a cut of a prescribed length is formed on the scribing start position on the lower surface of the mother glass substrate 90 in this manner, the pressure roller mechanism 142 is elevated while at the same time the cutting mechanism 134 for an incision of the scribing unit 130 is lowered.

Subsequently, the breaking unit 140 is slid in the scribing direction (+X axial direction) for a predetermined distance, and as a result the central section of the laser beam/cooling water receiving unit 145 in the sliding direction coincides with the optical axis of the laser beam irradiation optical system 133. Furthermore, regarding the scribing unit 130, nozzle 132a on the cooling mechanism 132 will be in an upward position for spraying cooling water by means of air cylinder 136b for vertical movement. When in these conditions, the scribing unit 130 and breaking unit 140 will be synchronized and slid together in the scribing direction (+X axial direction), while cooling water is sprayed upwards by the nozzle 132a and furthermore a laser beam irradiates upward from the laser beam irradiation optical system 133.

When the scribing unit 130 and the breaking unit 140 are synchronized to slide together in the scribing direction (+X axial direction), a laser beam is irradiated along the planned scribing line SL (planned separation line) of the mother glass substrate 90, and the area near the section to which the laser was irradiated on is cooled by means of cooling water. Hereby, the vertical cracks along the planned scribing line SL on the mother glass substrate 90 continuously generate from a cut placed on the scribing start position on the mother glass substrate 90.

In this case, the laser beam irradiated from the laser beam irradiation optical system 133 is irradiating along the planned scribing line SL on the mother glass substrate 90 by means of the drive unit for linear interpolation. In other words, by means of the drive unit for linear interpolation, the upper guide rail 112 and the lower guide rail 113 are slid together with the sliding of the scribing unit 130 and the breaking unit 140, and in a direction (Y axial direction) perpendicular to the sliding direction thereof (+X axial direction). By doing this, laser beams can irradiate along the planned scribing line SL on the mother glass substrate 90.

In the mother glass substrate 90 to which laser beams are irradiated, an internal stress that sandwiches the borderline BL between the first securing table 121a and the second securing table 121b while mutually facing reverse directions, is generated throughout the entire substrate along the Y axial direction. Due to this, localized distortions are prevented from generating on the mother glass substrate 90. Further, in terms of vertical cracks formed on the mother glass substrate 90, vertical cracks can be surely formed along the planned scribing line SL in front of the irradiation position of laser beams, and without deriving unnecessary cracks that are out of alignment with the planned scribing line.

In other words, when the mother glass substrate is set up on the surface of the first securing table 121a and the second securing table 121b, and is suctioned by vacuum pumps and that alike from suction holes set up on the surfaces of the first securing table 121a and the second securing table 121b, and through these means suction-chucked to the first securing table 121a and the second securing table 122b, the uneven internal stresses immanent within the substrate can be equalized (organized towards the Y axial direction) by the first securing table 121a and/or the second securing table 122b moving a micro distance along the Y axial direction as mentioned above.

The micro distance the first securing table 121a and/or the second securing table 121b travels along the Y axial direction is arranged in advance as a parameter for scribing conditions to prevent unnecessary cracks from preceding and continuously deriving on the vertical crack formed during scribing; or in other words, to prevent "forerunning" from deriving. Other parameters for scribing conditions include, among others, output from laser oscillators, laser beam density, scribing speed, the shape of the laser spot formed on the mother glass substrate 90 when laser beams are irradiated on the mother glass substrate 90, and intensity distribution.

In Embodiment 3, by means of moving the first securing table 121a and/or the second securing table 121b for a micro distance along the Y axial direction, the border line of the direction of the internal stress generated within the mother glass substrate 90 coincides with the planned scribing line SL. In addition, the abovementioned micro distance is arranged so unnecessary cracks are not forerunning during scribing. Thus, a vertical crack can be surely formed along the planned scribing line SL.

Although scribing is done by forming an internal stress that compresses the mother glass substrate 90 along the scribing direction (Y axial direction) as described above, the first securing table 121a and/or the second securing table 121b, for example, may also travel a micro distance along the Y axial direction to draw apart from each other mutually to form a tensile internal stress in the mother glass substrate 90.

In this manner, when the scribing unit 130 and breaking unit 140 are slid across from the edge of one side of the mother glass substrate 90 to the edge of the other side, a continuous vertical crack is formed along the planned scribing line SL (planned separation line) of the mother glass substrate 90. Thus, a scribe line S is formed across the edge of one side of the mother glass substrate 90 to the edge of the other side.

Once the scribe line S is formed on the mother glass substrate 90, the irradiation of laser beams from the laser beam irradiation optical system 133 are stopped, while spraying of cooling water from the cooling mechanism 132 is also stopped and nozzle 132a is arranged at its stand-by position down below. Subsequently, the breaking unit 140 on the upper side is slid in a direction opposite (-X axial direction) to the scribing direction, and the pressure roller 142a is arranged so it is opposing the end section of the scribe line S on the -X side. Furthermore, the scribing unit 130 on the lower side is slid so the roller for substrate securing 135a is opposing the end section of the scribe line on the -X side.

Furthermore in regards to the scribing unit 130, the first auxiliary roller 136a is elevated by the air cylinder 136b for vertical movement, while the second auxiliary roller 137a is elevated by the air cylinder 137b for vertical movement and arranged to be in contact with the lower surface of the mother glass substrate 90. In addition, the roller for substrate securing 135a is elevated with the motor (not shown) that vertically moves the head unit 135b, and is arranged to be in contact at a predetermined pressure with the lower surface of the mother glass substrate 90.

When in these conditions, the pressing-side first auxiliary roller 143a of the breaking unit 140 is lowered to be in contact with a section on the upper surface of the mother glass substrate 90 that is opposing the position that the second auxiliary roller 137a of the scribing unit 130 is in contact with. Furthermore, pressure roller 142a is lowered by the motor (not shown) that vertically moves the head unit 142b, and the pressure roller 142a is arranged so as to be pressed at a predetermined pressure onto a section on the upper surface of the mother glass substrate 90 that opposes the roller for substrate securing 135a.

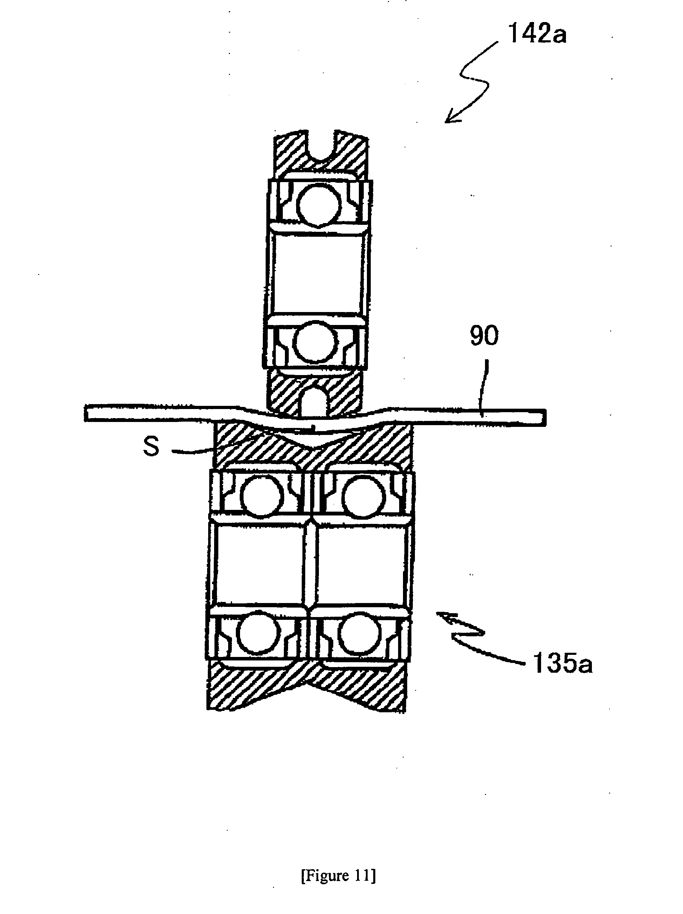

Figure 11 is a figure showing a condition wherein the pressure roller 142a is pressed at a predetermined pressure onto a section on the upper surface of the mother glass substrate 90.

In this case, as shown on Figure 11, the roller for substrate securing 135a, arranged on the lower side of the mother glass substrate 90, is in a state wherein its outer periphery surface has a V-shaped depression therein. The roller will also be in a state wherein both sides of its flat marginal sections in the width direction are correspondingly pressing on both sides of the scribe line S formed on the mother glass substrate 90. Furthermore, in regards to the pressure roller 142a, a U-shaped groove section 45g is formed on the central section in the width direction thereof. The central section of this groove section opposes the scribe line S formed on the mother glass substrate 90. Thus, by means of thrusting the pressure roller 142a into the depression on the roller for substrate securing 135a, the mother glass substrate 90 can be surely separated along the scribe line S.

For example, the dimensions in the width direction of the pressure roller 142a are approximately ½ of what the dimensions are for the width direction of the roller for substrate securing 135a. Due to this, the pressure roller 142a will be pressing onto a section on the upper surface of the mother glass substrate 90 near the scribe line S, rather than a section on the lower surface of the mother glass substrate 90 secured by both sides of the marginal sections of the roller for substrate securing 135a. In this case, the pressure roller 142a is arranged to reach a lowered position that is, for example, over 0.3mm below the upper surface of the mother glass substrate 90, and is thus pressed onto the upper surface of the mother glass substrate 90.

In this manner, the pressure roller 142a presses onto a section of the upper surface of the mother glass substrate 90 near the scribe line S, rather than a section of the lower surface of the mother glass substrate 90 being secured by both sides of the marginal sections on the roller for substrate securing 135a. Due to this, the mother glass substrate 90 is in a bent state protruded downwards with scribe line S at its center. The vertical crack on the end of the -X side of the scribe line S formed on the lower surface of the mother glass substrate 90 will then extend toward the thickness direction of the glass substrate, and reach the upper surface of the mother glass substrate 90. From the above described process, the mother glass substrate 90 is separated (broken).

In this manner, when the mother glass substrate 90 becomes separated at a position on the end section of the -X side of the scribe line S, the pressure roller 142a is slightly elevated and the pressing against the mother glass substrate 90 by the pressure roller 142a is slightly weakened. In this case, the pressure roller 142a is arranged to reach a lowered position that is within 0.3mm of the upper surface of the mother glass substrate 90.

When under these conditions, after the scribing unit 130 and the breaking unit 140 are synchronized and are sliding in the said scribing direction (+X side), the pressing-side second auxiliary roller 144a is lowered onto the mother glass substrate 90 opposing the first auxiliary roller 136a of the scribing unit 130. By doing this, sections on both sides on the scribe line S secured by the roller for substrate securing 135a are pressed by the pressure roller 142a. The roller for substrate securing 135a and the pressure roller 142a then correspondingly roll on the lower surface and upper surface of the mother glass substrate 90, and the mother glass substrate is continuously separated along the scribe line S starting from the position at the end section of the scribe line on the -X side.

In this case, the pressing-side first auxiliary roller 143a and the second auxiliary roller 137a, both positioned in front of the pressure roller 142a in the sliding direction, and the pressing-side second auxiliary roller 144a and the first auxiliary roller 136a, both positioned behind pressure roller 142a in the sliding direction, will press and secure from top and bottom the region in front of the scribe line S for separation as well as the mother glass substrate 90 after separation. Due to this, when the mother glass substrate 90 is broken (separated) along the scribe line S by pressing means of the pressure roller 142a, unnecessary force is not applied to sections of the mother glass substrate 90 for the separation procedure. Therefore, chipping, cuts, fractures and alike that are factors in causing malfunctions by products after the mother glass substrate 90 is separated, are prevented from generating.

Furthermore, the mother glass substrate 90 that is separated along the scribe line during the breaking (separating) process of the mother glass substrate 90 is secured by means of the first auxiliary roller 136a and the pressing-side second auxiliary roller 144a provided with predetermined spacing from the roller for substrate securing 135a in the scribing unit 130. Therefore, the separated mother glass substrate 90 is prevented from bending, chipping, cuts, fractures a and alike that are potential factors for causing malfunctions by products after the mother glass substrate 90 is separated, are prevented from generating.

In this manner, when the scribing unit 130 and the breaking unit 140 are slid in the scribing direction (+X axial direction) and reaches the edge of the mother glass substrate 90 on the +X side, the mother glass substrate 90 is separated along the entire region of the scribe line. In this condition, regarding the scribing unit 130, the second auxiliary roller 137a, the roller for substrate securing 135a, and the first auxiliary roller 136a are all lowered, resulting in all of the rollers becoming detached from the lower surface of the mother glass substrate 90. Furthermore, in regards to the breaking unit 140, the pressing-side first auxiliary roller 143a is elevated, while pressure roller 142a and pressing-side second auxiliary roller 144a are also elevated, and thus these rollers too become detached from the mother glass substrate 90.

After this, the scribing unit 130 and the breaking unit 140 are correspondingly slid and arranged in the stand-by positions at the end sections of the upper guide rail 112 and the lower guide rail 113.

In this manner, a scribe line S can be surely formed along the planned scribing line SL by means of the separation system of brittle material substrates in Embodiment 3. In addition, the mother glass substrate 90 on which the scribe line S was formed can also be surely separated along the scribe line S. Furthermore, since the mother glass substrate 90 can be continuously separated along a formation of the scribe line S, work efficiency is improved. Also, when separating the mother glass substrate 90, there is no concern of fractures, chipping and those alike generating on the separated surface.

In Embodiment 3, the breaking unit 140 is slidably attached to the upper guide rail 112, and the scribing unit 130 is slidably attached to the lower guide rail 113. However, the Embodiment should not be limited to this, and the breaking unit 140 may be slidably attached to the lower guide rail 113, and the scribing unit 130 may be slidably attached to the upper guide rail 112.

Also, according to the separation system for brittle material substrate of the present invention (separation system 100 for brittle material substrate), under conditions wherein the securing means (substrate securing roller mechanism 135) secures the first principle surface of the brittle material substrate (mother glass substrate 90), and the pressing means (pressure roller mechanism 142) presses the second principle surface of the brittle material substrate; since the pressing means can be moved along the scribe line S formed on the first principle surface of the brittle material substrate by utilizing the scribing method of the present invention, applied pressure can be employed against the second principle surface opposing the first principle surface on which the scribe line S is formed. As a result, the vertical crack produced from the scribe line S can be surely extended towards the thickness direction of the substrate by a bending momentum that can be applied to the brittle material substrate. Thus, the brittle material substrate can be separated.

In describing Embodiments 1 through 3, as a brittle material substrate a mother glass substrate that structures liquid crystal display panel substrates, which is a type of flat panel display was described, Also, scribing methods employing this substrate as well as scribing apparatuses utilizing methods thereof and separation methods and separation systems utilizing methods thereof were described. However, the present invention should not be limited to this structure, and single panel brittle substrates such as quartz substrates, sphere substrates, semiconductor wafers, and ceramic substrates may also be applied to the present invention.

Furthermore, in Embodiments 1 and 2, as a formation means for the scribe line S a wheel cutter that rolls along the planned scribing line SL was exemplified. However, a laser beam may be irradiated instead along the planned scribing line SL to form the scribe line S. In Embodiment 3, a scribing line is formed by irradiating a laser beam as a means of forming a scribing line S. However, a scribing line may be also formed by rotating a wheel cutter along a planned scribing line SL.

As described in Embodiments 1 through 3, according to the scribing method and the scribing apparatus of the present invention, the internal stress near the planned scribing line is equalized and an unnecessary crack can be prevented from deriving from the vertical crack formed on the mother glass substrate by forming a micro distortion from compressing or pulling a mother glass substrate being suction-chucked. In other words, the internal stress that the said substrate possesses which extends towards unspecified directions is equalized, and an accurate vertical crack can be formed along the planned scribing line by forming a micro distortion on the mother glass substrate.

By either pulling or compressing the mother glass substrate being suction-chucked, the internal stress near the planned scribing line can be equalized. Thus, adsorption securing mechanisms conventionally utilized to secure mother glass substrates can be employed. Therefore, there is no need to separately set up a sophisticated mechanism for internal stress equalization.

By first mounting the brittle material substrate to be laid over a pair of securing tables, and then suction-chucking the said substrate on the said securing tables, and finally approaching or separating each of the said securing tables mutually along a direction perpendicular to the planned scribing line (or a direction along the planned scribing line), a micro distortion is formed on the said substrate. Thus, the equalization of internal stress becomes possible using simple mechanisms.

Because the equalization of internal stress in the vicinity of the planned scribing line can be detected by the distortion detection unit (internal stress detection means), the region of a substrate on which the internal stress has been equalized can be precisely scribed thereon.

The present invention has been exemplified thus far using the preferred Embodiments of the present invention. The present invention, however, should not be interpreted solely based on the Embodiments above. It is to be understood that the scope of the present invention should be construed solely based on the scope of patent claims. It is to be also understood that those in the art should be able to implement equivalent scope of technology based on the description of the detailed preferred Embodiments of the present invention, the description of the present invention as well as commonly practiced technology.

### Industrial Applicability

The present invention applies to a scribing method for single panel brittle material substrates such as quartz substrates, sphere substrates, semiconductor wafers, and ceramic substrates, wherein the scribing method scribes along a planned scribing line thereof. The present invention also applies to a separation system consisting of a scribing apparatus and a breaking mechanism utilizing the scribing method thereof. Furthermore, in terms of brittle material substrates, different types of flat display panels such as plasma display panels, organic electroluminescence display panels, inorganic electroluminescence display panels, transmissive projector substrates, and reflective projector substrates that are either bonding substrates or single panel substrates may also effectively apply the scribing method of the present invention and the scribing apparatus utilizing the method thereof, as well as the separation method and the separation system utilizing the method thereof.

According to the present invention, in regards to brittle material substrates such as glass substrates, the yield rates of the separation work of such brittle material substrates can be significantly improved by precisely forming a scribe line along the planned scribe line thereon. Furthermore, unnecessary cracks that are out of alignment with the planned scribe line arranged in advance can be prevented from continuously deriving out of vertical cracks formed on the brittle material substrate by means of the said scribing method.

## Claims

1. A scribing method for a brittle material substrate (90), wherein formation of a scribe line is established along a planned scribing line (SL) on at least one side of the brittle material substrate (90),
**characterized in that**
a micro distortion is formed in advance on the brittle material substrate (90) to equalize internal stress in the vicinity of the planned scribing line (SL), said micro distortion being formed on the brittle material substrate (90) by means of mounting the brittle material substrate (90) so as to be laid over a pair of securing tables (41, 42; 61, 62; 121A, 121B), followed by suction-chucking the brittle material substrate (90) to the securing tables (41, 42; 61, 62; 121A, 121B), and then having each securing table (41, 42; 61, 62; 121A, 121B) approach or draw from each other while detecting the internal stress distribution in the vicinity of the planned scribing line (SL) by using an internal stress detection means (47; 180) and having each of the securing tables (41, 42; 61, 62; 121A, 121B) approach or draw from each other according to detection results detected by the internal stress detection means (47; 180).

2. The scribing method of Claim 1 wherein formation of the scribe line is established by utilizing a laser beam irradiation unit (130) that irradiates a laser beam along the planned scribing line (SL), and/or a cutter wheel (31) that moves along the planned scribing line (SL).

3. A scribing apparatus (40) for a brittle material substrate (90) forming a scribe line along a planned scribing line (SL) arranged on at least one side of the brittle material substrate (90), comprising:
a scribing means (31; 130) for forming a vertical crack in the thickness direction of the brittle material substrate (90); and
a pair of securing tables (41, 42; 61, 62; 121A, 121B) arranged with an interval that suction-chuck the brittle material substrate (90), as well as a means of table movement (45, 46) for having each securing table (41, 42; 61, 62; 121A, 121B) approach or draw from each other, **characterized by**
an internal stress detection means (47; 180) that detects the distribution of internal stress in the vicinity of the planned scribing line (SL); and
a control unit for carrying out instructions to the means of table movement (45, 46) to have each of the securing tables (41, 42; 61, 62; 121A, 121B) approach or draw from each other according to detection results detected by the internal stress detection means (47; 180) in order to equalize internal stress in the vicinity of the planned scribing line (SL) by means of forming a micro distortion on the brittle material substrate (90).

4. The scribing apparatus (40) for a brittle material substrate (90) of Claim 3 wherein the scribing means (31; 130) is a laser beam irradiation unit (130) for irradiating laser beams along the planned scribing line (SL) and/or a wheel cutter (31) that travels along the planned scribing line (SL).

5. A separation system (100) for a brittle material substrate (90) comprising:
the scribing apparatus of Claim 3 or 4; and
a breaking device (140) for breaking the brittle material substrate (90) along a scribe line formed on the brittle material substrate (90) by means of the scribing apparatus.

## Patentansprüche

1. Anreißverfahren für ein sprödes Werkstoffsubstrat (90), wobei entlang einer geplanten Anreißlinie (SL) auf mindestens einer Seite des spröden Werkstoffsubstrats (90) die Ausbildung einer Ritzlinie vollzogen wird,
**dadurch gekennzeichnet, dass**
auf dem spröden Werkstoffsubstrat (90) zuvor eine Mikroverformung ausgebildet wird, um Eigenspannung in der Umgebung der geplanten Anreißlinie (SL) auszugleichen, wobei die Mikroverformung auf dem spröden Werkstoffsubstrat (90) mittels so erfolgendem Montieren des spröden Werkstoffsubstrats (90) ausgebildet wird, dass es über einem Paar Befestigungstischen (41, 42; 61, 62; 121A, 121B) liegt, gefolgt von Ansaugklemmen des spröden Werkstoffsubstrats (90) an die Befestigungstische (41, 42; 61, 62; 121A, 121B) und dann jeden Befestigungstisch (41, 42; 61, 62; 121A, 121B) sich nähern oder auseinandergehen lassen, während die Eigenspannungsverteilung in der Umgebung der geplanten Anreißlinie (SL) unter Verwendung einer Eigenspannungserfassungseinrichtung (47; 180) erfasst wird und jeder Befestigungstisch (41, 42; 61, 62; 121A, 121B) gemäß Erfassungsergebnissen, die von der Eigenspannungserfassungseinrichtung (47; 180) erfasst werden, sich nähern oder auseinandergehen gelassen wird.

2. Anreißverfahren des Anspruchs 1, wobei die Ausbildung der Ritzlinie unter Nutzung einer Laserstrahlbestrahlungseinheit (130), die entlang der geplanten Anreißlinie (SL) einen Laserstrahl abstrahlt, und/oder eines Schneiderads (31), das sich entlang der geplanten Anreißlinie (SL) bewegt, vollzogen wird.

3. Anreißapparat (40) für ein sprödes Werkstoffsubstrat (90), der entlang einer geplanten Anreißlinie (SL), die auf mindestens einer Seite des spröden Werkstoffsubstrats (90) angeordnet ist, eine Ritzlinie ausbildet, mit:
einer Anreißeinrichtung (31; 130) zum Ausbilden eines vertikalen Risses in der Dickenrichtung des spröden Werkstoffsubstrats (90); und
einem Paar in einem Intervall angeordneter Befestigungstische (41, 42; 61, 62; 121A, 121B), die das spröde Werkstoffsubstrat (90) durch Ansaugen klemmen, sowie einer Einrichtung zur Tischbewegung (45, 46), um jeden Befestigungstisch (41, 42; 61, 62; 121A, 121B) sich nähern oder auseinandergehen zu lassen,
**gekennzeichnet durch**
eine Eigenspannungserfassungseinrichtung (47; 180), die die Verteilung von Eigenspannung in der Umgebung der geplanten Anreißlinie (SL) erfasst; und
eine Steuerungseinheit, um Anweisungen an die Einrichtung zur Tischbewegung (45, 46) durchzuführen, um jeden Befestigungstisch (41, 42; 61, 62; 121A, 121B) gemäß Erfassungsergebnissen, die von der Eigenspannungserfassungseinrichtung (47; 180) erfasst werden, sich nähern oder auseinandergehen zu lassen, damit Eigenspannung in der Umgebung der geplanten Anreißlinie (SL) mittels Ausbilden einer Mikroverformung auf dem spröden Werkstoffsubstrat (90) ausgeglichen wird.

4. Anreißapparat (40) für ein sprödes Werkstoffsubstrat (90) des Anspruchs 3, wobei die Anreißeinrichtung (31; 130) eine Laserstrahlbestrahlungseinheit (130) zum Abstrahlen von Laserstrahlen entlang der geplanten Schreiblinie (SL) und/oder ein Radschneider (31), der entlang der geplanten Anreißlinie (SL) läuft, ist.

5. Trennsystem (100) für ein sprödes Werkstoffsubstrat (90) mit:
dem Anreißapparat des Anspruchs 3 oder 4; und
einer Brechvorrichtung (140) zum Brechen des spröden Werkstoffsubstrats (90) entlang einer Ritzlinie, die auf dem spröden Werkstoffsubstrat (90) mittels des Anreißapparats ausgebildet wird.

## Revendications

1. Procédé de découpe pour un substrat en matériau fragile (90), dans lequel la formation d'une ligne de découpe est établie le long d'une ligne de découpe prévue (SL) sur au moins un côté du substrat en matériau fragile (90), **caractérisé en ce que**
une micro-distorsion est préalablement formée sur le substrat en matériau fragile (90) pour compenser une contrainte interne au voisinage de la ligne de découpe prévue (SL), ladite micro-distorsion étant formée sur le substrat en matériau fragile (90) par montage du substrat en matériau fragile (90) de manière à être posé sur une paire de tables de fixation (41, 42 ; 61, 62 ; 121A, 121B), suivi par fixation par aspiration du substrat en matériau fragile (90) aux tables de fixation (41, 42 ; 61, 62 ; 121A, 121B), et en rapprochant ou en retirant par la suite chacune des tables de fixation (41, 42 ; 61, 62 ; 121A, 121B) les unes des autres tout en détectant la distribution de la contrainte interne au voisinage de la ligne de découpe prévue (SL) à l'aide d'un moyen de détection de contrainte interne (47 ; 180) et en rapprochant ou en retirant chacune des tables de fixation (41, 42 ; 61, 62 ; 121A, 121B) les unes des autres selon les résultats de détection détectés par le moyen de détection de contrainte interne (47 ; 180).

2. Procédé de découpe de la revendication 1, dans lequel la formation de la ligne de découpe est établie en utilisant une unité d'irradiation de faisceau laser (130) qui irradie un faisceau laser le long de la ligne de découpe prévue (SL), et/ou une molette coupante (31) qui se déplace le long de la ligne de découpe prévue (SL).

3. Appareil de découpe (40) pour un substrat en matériau fragile (90) formant une ligne de découpe le long d'une ligne de découpe prévue (SL) agencée sur au moins un côté du substrat en matériau fragile (90), comprenant :
un moyen de découpe (31 ; 130) pour former une fissure verticale dans la direction de l'épaisseur du substrat en matériau fragile (90) ; et
une paire de tables de fixation (41, 42 ; 61, 62 ; 121A, 121B) disposées avec un intervalle entre elles qui permet un serrage par aspiration du substrat en matériau fragile (90), ainsi qu'un moyen de déplacement de table (45, 46) permettant de rapprocher ou de retirer chacune des tables de fixation (41, 42 ; 61, 62 ; 121A, 121B) les unes des autres,
**caractérisé en ce que**
un moyen de détection de contrainte interne (47 ; 180) qui détecte la distribution de la contrainte interne au voisinage de la ligne de découpe prévue (SL) ; et
une unité de commande permettant d'exécuter des instructions au moyen de déplacement de table (45, 46) pour rapprocher ou retirer chacune des tables de fixation (41, 42 ; 61, 62 ; 121A, 121B) les unes des autres selon les résultats de détection détectés par le moyen de détection de contrainte interne (47 ; 180) afin de compenser la contrainte interne au voisinage de la ligne de découpe prévue (SL) en formant une micro-distorsion sur le substrat en matériau fragile (90).

4. Appareil de découpe (40) pour un substrat en matériau fragile (90) de la revendication 3, dans lequel le moyen de découpe (31 ; 130) est une unité d'irradiation de faisceau laser (130) pour irradier des faisceaux laser le long de la ligne de découpe prévue (SL) et/ou une molette coupante (31) qui se déplace le long de la ligne de découpe prévue (SL).

5. Système de séparation (100) pour un substrat en matériau fragile (90) comprenant :
l'appareil de découpe de la revendication 3 ou 4 ; et
un dispositif de rupture (140) pour briser le substrat en matériau fragile (90) le long d'une ligne de découpe formée sur le substrat en matériau fragile (90) au moyen de l'appareil de découpe.
